# EUROPÄISCHE PATENTSCHRIFT

(11) **EP 1 197 430 B1**
(45) Veröffentlichungstag und Bekanntmachung des Hinweises auf die Patenterteilung: **12.05.2004**
(21) Anmeldenummer: 01128060.9
(22) Anmeldetag: 21.08.1998
(51) Int. Cl.: B65B 7/16, B65B 3/00, C03B 23/09, C03B 23/18, C03B 23/043, B23K 26/06

(54) **Verschliessen von Ampullen mittels Laserstrahlung**
Sealing ampoules by means of a laser beam
Scellages d'ampoules par faisceau laser

(30) Priorität: 22.08.1997 DE 19736732
(43) Veröffentlichungstag der Anmeldung: 17.04.2002
(62) Teilanmeldung aus: 98948857.2
(73) Patentinhaber: Bausch + Ströbel Maschinenfabrik GmbH & Co., 74532 Ilshofen (DE)
(72) Erfinder: Bullinger, Siegfried, 74352 Ilshofen (DE); Wieland, Werner, 74586 Frankenhardt (DE); Hesener, Hanno, 30161 Hannover (DE); Berndt, Andreas, 55118 Mainz (DE)
(74) Vertreter: Jordan, Volker, Dr.

(56) Entgegenhaltungen:
- EP-A- 0 717 011
- DE-A- 1 566 547
- FR-A- 1 549 511
- GB-A- 2 105 320
- US-A- 3 923 487
- US-A- 5 315 108
- PATENT ABSTRACTS OF JAPAN vol. 010, no. 123 (C-344), 8. Mai 1986 (1986-05-08) & JP 60 251138 A (HOOYA KK), 11. Dezember 1985 (1985-12-11)

## Beschreibung

Die Erfindung betrifft eine Ampullenfüll- und -verschließeinrichtung, umfassend: eine Füllstation zum Füllen von Ampullen, eine Verschließstation zum Verschließen von Ampullen durch Zuschmelzen einer Ampulleneinfüllöffnung, eine Fördereinrichtung mit einer Ampullen-Förderstrecke zum Zuführen von leeren Ampullen zur Füllstation und von gefüllten Ampullen von der Füllstation zur Verschließstation und zum Abführen von gefüllten Ampullen von der Verschließstation. Die Erfindung betrifft ferner ein Verfahren zum Öffnen einer geschlossenen Ampulle durch Aufschmelzen einer Ampullen-Einfüllöffnung.

Herkömmlich werden Ampullen, es wird hier insbesondere an Glasampullen (vor allem medizinische Glasampullen) gedacht, im Rahmen einer für größere Stückzahlen ausgelegten Produktion (beispielsweise von pharmazeutischen Produkten) durch Einrichtungen der genannten Art gefüllt und verschlossen, bei denen die Verschließstation wenigstens einen Gasbrenner umfaßt, um die jeweilige Ampulle mittels einer Gasflamme zuzuschmelzen. Befriedigende Verschließergebnisse werden bisher nur dadurch erreicht, daß die Ampullen durch die Gasflamme abgeschmolzen werden und daß anschließend ein Ampullenspieß der Ampulle mittels einer Spießabzugszange abgezogen wird. Zwar wurde gemäß der DE 38 10 940 C2 schon in Erwägung gezogen, beim Verschließen einer einzelnen Ampulle diese unter Verwendung einer Infrarotlampe abzuschmelzen. Aufgrund der Energiedichte der Infrarotstrahlung einer Infrarotlampe muß bezweifelt werden, ob in einem praktischen Einsatz auf diese Weise überhaupt ein Verschließen von Ampullen möglich ist. Sofern überhaupt ein zuverlässiges Verschließen möglich ist, so sind die hierfür erforderlichen Bestrahlungszeiten der jeweiligen Ampulle so hoch, daß der Vorschlag der DE 38 10 940 C2 keine Alternative zu dem herkömmlichen Verschließen unter Anwendung von Gasbrennern darstellt. Dies gilt umso mehr, als daß Infrarotlampen in einem Wellenlängenbereich emittieren (etwa 1-3 µm), in dem übliche Glassorten nicht oder nur sehr schwach Strahlung absorbieren, so daß Ampullen aus Spezialglas eingesetzt werden müßten.

Obwohl Laserstrahlung schon seit einiger Zeit zum Umformen, Umschmelzen oder zur Wärmebehandlung von Werkstücken auch aus Glas eingesetzt wird (vgl. beispielsweise die EP 0 794 031 A2 und die EP 0 076 925 A1), existieren auf dem Markt nach wie vor nur Ampullenfüll- und -verschließeinrichtungen der eingangs genannten Art, bei denen die Ampullen unter Anwendung von Gasbrennerflammen auf die beschriebene Art und Weise verschlossen werden. Dabei bestehen hinreichend Gründe, die Gasbrenner durch andere Erhitzungsmittel zu ersetzen, da der Einsatz von Gasbrennern nämlich in vielerlei Hinsicht unvorteilhaft ist. So besteht einerseits ein hoher Installationsaufwand für die Gasversorgung der Gasbrenner. Die von den Gasbrennern abgegebene Hitze muß durch eine Absaugeinrichtung abgeführt werden, wodurch eine insbesondere im pharmazeutischen Anwendungsbereich häufig vorgesehene Laminarluftströmung im Bereich der Förderstrecke gestört wird. Es ist ferner eine ständige Überwachung der Zündung bzw. des Brennens der Gasflamme erforderlich. Im Falle eines Anzündens der Brenner braucht die Anlage eine recht lange Zeit zum Hochfahren, so daß man im Falle eines Nothalts die Brenner brennen läßt und dabei in Kauf nimmt, daß momentan unter der Einwirkung der Brenner stehende Ampullen kaputtgeschmolzen werden. Auch läßt sich die von den Brennern abgegebene Wärme nur schwer und ungenau einstellen, so daß die Reproduzierbarkeit und Dokumentierbarkeit der Produktion zu wünschen übrig läßt. Auch die Produktionssicherheit ist damit verbesserungswürdig. Ferner ist aufgrund der Gasbrenner die Bedienung der Einrichtung relativ kompliziert und fehlerträchtig. Die Gasbrenner müssen in regelmäßigen Abständen ausgetauschtwerden, was einen entsprechend hohen Wartungsaufwand bedeutet. Ferner können durch heiße Teile im Bereich der Gasbrenner Bedienpersonen verletzt werden. Im Hinblick auf pharmazeutische Produkte, die höchsten Reinheitsanforderungen genügen müssen, besteht ferner das Problem, daß durch die Gasflamme Rußpartikel entstehen können, die kaum vollständig aus dem Ampulleninneren ferngehalten werden können. Dadurch, daß herkömmlich die Ampullen unter Abziehen eines Ampullenspießes verschlossen werden, wird der Rußeintrag in die Ampullen minimiert. An sich bedeutet aber das Abziehen von Ampullenspießen einen höheren Aufwand einerseits hinsichtlich entsprechender Abziehorgane der Einrichtung und andererseits hinsichtlich des Material- und Herstellungsaufwands für die Ampullen selbst.

Trotz dieser Gründe, die an und für sich für eine Ablösung von Gasbrennern durch andere Mittel sprechen, hat man in der Praxis bisher weiterhin auf Gasbrenner gesetzt. Dies mag daran liegen, daß insbesondere im Falle von medizinischen Ampullen für Pharmazeutika höchste Anforderungen an die Dichtigkeit und Sterilität bestehen, wobei der Einsatz von Gasbrennern einerseits durch die große Hitzeeinwirkung für das Aufrechterhalten bzw. Herstellen von sterilen Bedingungen im Bereich der Verschließstation förderlich ist und andererseits der von der Gasflamme ausgeübte mechanische Druck auf das Ampullenwandmaterial ein Verlaufen des erschmolzenen Wandmaterials, insbesondere Glases, und damit ein zuverlässiges Zuschmelzen ohne kapillare Durchgangsöffnungen fördert.

Ein Verfahren zum Öffnen einer geschlossenen Ampulle nach dem Oberbegriff des Anspruchs 6 ist bekannt aus der DE 1 566 547 A.

Es wurde gefunden, daß sich auch durch Einsatz von Laserstrahlung Ampullen zuverlässig zuschmelzen lassen. Auch in der Patentliteratur wurde schon ein entsprechender Vorschlag gemacht; es wird auf die GB 2 105 320 A verwiesen, die eine Einrichtung nach dem Oberbegriff von Anspruch 1 offenbart. Dem gegenüber schlägt die Erfindung die Einrichtung mit den Merkmalen des Anspruchs 1 und das Verfahren mit den Merkmalen des Anspruchs 6 vor, deren Vorteile weiter Unten erlaütert werden.

Daß ein zuverlässiges Zuschmelzen unter Einsatz von Laserstrahlung möglich ist, mag überraschen, da bei Verzicht auf eine Gasflamme der mechanische Gasflammendruck fehlt. Auch wirkt ein Laserstrahl an einer vergleichsweise lokalisierten Stelle auf eine Ampulle ein im Gegensatz zu der großflächigeren Einwirkung einer Gasflamme. Es steht außer Frage, daß durch eine Laserstrahleinwirkung Glas im Sinne der oben genannten Schriften EP 0 794 031 A2 und EP 0 076 925 A1 bearbeitet werden kann. Daß aber auch ein Verschließen von Ampullen Praktikabel ist, konnte nicht unbedingt erwartet werden, denn aufgrund der genannten vergleichsweise lokalisierten Laserstrahleinwirkung und der fehlenden mechanischen Gasflammeneinwirkung mußte befürchtet werden, daß ein reproduzierbares Zuschmelzen ohne kapillare Durchgänge nicht möglich ist.

Durch den Verzicht auf Gasbrenner ergeben sich große Vorteile. Zum einen erübrigt sich der oben genannte Installations- und Überwachungsaufwand. Durch die Laserstrahlung kann gezielt die jeweilige Ampulle erhitzt werden, so daß keine Hitze aus der Anlage abgeführt werden muß. Eine ggf. vorgesehene laminare Luftströmung wird deshalb nicht gestört. Die Ampullenfüll- und -verschließeinrichtung kann schnell hochgefahren und wieder heruntergefahren werden, wobei sich die Laserstrahlungsquelle (der wenigstens eine Laser) nach Bedarf an- und abschalten läßt. Für eine kurzzeitige Unterbrechung des Laserstrahls kann auch eine Laserstrahlfalle oder dergleichen in den Laserstrahlungsgang eingebracht werden. Unabhängig davon, ob der Laser an- und ausgeschaltet oder eine Laserstrahlfalle in den Strahlengang eingebracht wird, kann die Einwirkung von Laserstrahlung auf die jeweilig bearbeitete Ampulle bzw. die jeweils bearbeiteten Ampullen ohne wesentlichen Zeitverzug unterbrochen werden, sollte dies beispielsweise im Falle eines Nothalts oder beim Herunterfahren der Anlage erforderlich sein. Damit kann zuverlässig verhindert werden, daß Ampullen in einer solchen Situation kaputtgeschmolzen werden, so daß die Einrichtung keinen wesentlichen Ausschuß produziert. Von besonderer Bedeutung ist, daß die Lasereinwirkung genau und reproduzierbar steuerbar ist, so daß eine hohe Produktionssicherheit erreicht wird. Die Produktionsparameter können dabei aufgezeichnet, also dokumentiert werden, was im Hinblick auf die Qualitätssicherung ein wichtiger Vorteil ist. Durch die Steuerbarkeit des Lasers kann die Lasereinwirkung, insbesondere die Laserleistung, an die momentane Taktzeit der Einrichtung bzw. die momentane Einwirkungsdauer der Laserstrahlung angepaßt werden, was beispielsweise beim Hochfahren oder Herunterfahren der Anlage oder auch im Falle eines Nothalts vorteilhaft ist, um trotz der damit einhergehenden Änderung des Betriebszustands der Einrichtung schon gefüllte Ampullen noch ordnungsgemäß zuzuschmelzen oder schon mit dem Füllen und Zuschmelzen von Ampullen zu beginnen. Hierdurch wird eine hohe Produktivität ohne wesentlichen Ausschuß an Ampullen erreicht.

Die gute Steuerbarkeit der Lasereinwirkung sowohl hinsichtlich der der Ampulle erteilten Wärmeenergie als auch hinsichtlich der Möglichkeit, die Lasereinwirkung gezielt in einem bestimmten Bereich der Ampulle zu lokalisieren, bietet überdies den Vorteil, daß eine ungewünschte Erhitzung der in die Ampulle eingeführten Substanzen, beispielsweise empfindliche Pharmazeutika, verhindert werden kann. Auch dies trägt zu einer sehr hohen Produktionssicherheit bei. Weiterhin kann die Ampullenfüll- und -verschließeinrichtung bezogen auf ihre Abfüll- und Verschlußleistung (Ampullen pro Zeiteinheit) wesentlich kompakter ausgebildet werden, als dies im Falle von Verschließstationen mit Gasbrennern möglich ist. Sofern das Abfüllen und Verschließen unter Reinraumbedingungen erfolgt, ist damit weniger Reinraumplatz erforderlich. Ein weiterer Vorteil ist, daß eine Verletzung von Personen durch erhitzte Teile ausgeschlossen ist. Es müssen nur die üblichen, im Zusammenhang mit dem Einsatz von Lasern bekannten Maßnahmen zum Schutz vor Laserstrahlung getroffen werden, beispielsweise Verrohrung der Laserstrahlung, Vorsehen von, Strahlfallen und dergleichen, je nach Auslegung der Ampullenfüll- und -verschließeinrichtung und der Anordnung des Lasers relativ zur Verschließstation. Der hierfür erforderliche Aufwand ist vergleichsweise niedrig.

Wenn auch im Falle eines Verzichts auf Gasbrenner das Problem eines Rußeintrags in die Ampullen nicht mehr besteht, so kann trotzdem die Verschließstation eine Einrichtung zum Abziehen von Ampullenspießen aufweisen, um die Ampullen durch Abschmelzen und anschließendes Abziehen des jeweiligen Ampullenspießes zu verschließen. Durch dieses Abziehen des jeweiligen Ampullenspießes wird nämlich ein Zusammenlaufen des erschmolzenen Ampullenwandmaterials, insbesondere Glases, gefördert, so daß mit hoher Zuverlässigkeit eine hervorragende Dichtigkeit der Ampullen erreicht werden kann. Auch läßt sich hierdurch eine gute Form des Ampullenkopfes, also eine gute Ampullengeometrie mit ausreichender Wanddicke und ausreichender mechanischer Belastbarkeit, erreichen.

Es hat sich aber auch gezeigt, daß bei sorgfältiger Abstimmung der Parameter der Lasereinwirkung ein Verschließen der Ampullen ohne Abziehen eines jeweiligen Ampullenspießes möglich ist, ohne daß Abstriche bei der Qualität des Ampullenverschlusses, insbesondere des Ampullenkopfes bzw. der Ampullenkuppe, gemacht werden müssen. Eine Möglichkeit, daß die Ampulle durch Anschmelzen eines an die Ampullenöffnung angrenzenden Ampullenabschnitts bis zum Verschließen der Ampullenöffnung durch zusammenlaufendes/zusammenfallendes Ampullenwandmaterial des angeschmolzenen Ampullenabschnitts verschlossen wird.

Zur Unterstützung des Verschließvorgangs kann man ein Bearbeitungsgas auf einen erweichten Abschnitt der Ampulle richten, um auf diesen mechanischen einzuwirken. Hierzu kann die Verschließstation eine Bearbeitungsgaszuführeinrichtung aufweisen, um das Bearbeitungsgas auf erweichte Abschnitte der Ampulle zu richten. Der Einsatz von Bearbeitungsgas ist insbesondere für den Fall des Verschließens von Ampullen ohne Abziehen von Ampullenspießen zweckmäßig, um das Zusammenlaufen/Zusammenfallen des Ampullenwandmaterials zu fördern. Man kann aber auch daran denken, im Falle des Abziehens von Ampullenspießen zusätzlich auf die erweichten Abschnitte der Ampulle mechanisch einwirkendes Bearbeitungsgas einzusetzen.

Das ordnungsgemäße Verschließen der Ampullen mit hoher Dichtigkeit und guter Geometrie des Ampullenkopfes wird dadurch gefördert, wenn die Ampulle vor dem eigentlichen Verschließen vorerwärmt wird. Das Vorerwärmen ermöglicht, daß in der Ampulle oberhalb des Füllspiegels enthaltenes Gas (Luft oder Schutzgas) auf eine ausreichend hohe Temperatur gebracht wird und entsprechend der mit der Temperaturerhöhung einhergehenden Expansion aus der Ampulle entweichen kann, bevor diese verschlossen wird. Ferner ist die Vorerwärmung hilfreich, ausreichend Wärmeenergie in das Ampullenmaterial einzubringen und eine gewisse Verteilung der Wärmeenergie im Ampullenspieß bzw. in den an die Ampullenöffnung angrenzenden Ampullenabschnitten zu ermöglichen, bevor die Ampulle verschlossen wird, so daß es zu keinem wesentlichen Aufbau von Spannungen im Kopfbereich der verschlossenen Ampulle kommt, die nach dem Erkalten der Ampulle die mechanische Stabilität der Ampulle beeinträchtigen könnten. Hierdurch wird also eine hohe mechanische Belastbarkeit der verschmolzenen Ampullenköpfe erreicht. In bezug auf die erfindungsgemäße Einrichtung wird deshalb vorgeschlagen, daß die Verschließstation dafür ausgebildet oder eine gesonderte Vorerwärmungseinrichtung dafür vorgesehen ist, die jeweilige zu verschließende Ampulle zuerst während einer Vorerwärmungsphase vorzuerwärmen, bevor die Ampulle während einer Verschließphase durch Einwirkung von Laserstrahlung und ggf. durch Abziehen eines Ampullenspießes verschlossen wird.

Die Vorerwärmung kann in einer gegenüber einer Verschließphase gesonderten Vorerwärmungsphase erfolgen. Man kann das Vorerwärmen und das Verschließen aber auch in einem Zuge durchführen, ohne daß zwingend eine Vorerwärmungsphase und eine Verschließphase eindeutig unterscheidbar sind. Wesentlich ist, daß einerseits das in der Ampulle enthaltene Gas vor Schließen der Ampulleneinfüllöffnung durch geschmolzenes Wandmaterial hinreichend erwärmt wird und entsprechend seiner temperaturbedingten Expansion aus der Ampulle entweichen kann und daß andererseits die Ampulle bzw. der Ampullenspieß derart Wärmeenergie aufnimmt, daß eine räumliche Temperaturverteilung erreicht wird, die nach dem Verschließen und dem nachfolgenden Erkalten der Ampulle keine wesentlichen Spannungen im Kopfbereich der Ampulle zurückläßt. Es ist also grundsätzlich auch möglich, die Ampulle kontinuierlich mit Laserstrahlung bestimmter, eventuell vergleichsweise niedriger (ggf. konstant bleibender) Leistung zu bestrahlen, so daß die Ampulle unter Erwärmung und Expansion des Gases in der Ampulle allmählich erwärmt wird, bis schließlich das Ampullenwandmaterial schmilzt und die Ampullenöffnung dann verschlossen wird. Für kurze Einwirkungszeiten für die Laserstrahlung, ggf. kurze Taktzeiten, ist es aber vorteilhaft, tatsächlich eine gegenüber einer Verschließphase gesonderte Vorerwärmungsphase vorzusehen, in der die zum Vorerwärmen erforderliche Energie in einem kurzen Zeitintervall der Ampulle zugeführt wird. Hieran schließt sich dann, ggf. in einem zeitlichen Abstand, die Verschließphase an, in der der Ampulle weitere Energie zugeführt wird, bis das Ampullenmaterial schmilzt und die Ampullenöffnung entweder durch Abziehen eines Ampullenspießes oder durch zusammenlaufendes/zusammenfallendes Ampullenwandmaterial geschlossen wird, ggf. mit Unterstützung des Verschließvorgangs durch ein Bearbeitungsgas.

Gegenüber dem an sich bekannten Vorerwärmen durch Gasbrenner im Falle einer herkömmlichen Einrichtung wie oben beschrieben, bei der die Ampullen durch Gasflammen abgeschmolzen werden, besteht bei dem hier vorgeschlagenen Vorerwärmen ein wesentlicher Unterschied. Das herkömmliche Vorerwärmen diente dazu, überhaupt ausreichende Wärmeenergie in das Ampullenwandmaterial einzubringen, da die durch Gasbrenner in das Material einbringbare Wärmeleistung vergleichsweise niedrig ist. Aufgrund der entsprechend langen Einwirkungszeiten der Gasflamme konnte die in der Ampulle enthaltene Luft ausreichend Wärme aufnehmen und expandieren, bevor es zum Ampullenverschluß kam.

Im Falle des Einsatzes von Laserstrahlung lassen sich grundsätzlich extrem hohe Strahlungsleistungen erreichen, so daß das Einbringen ausreichender Wärmeenergie kein Problem mehr darstellt, und das Vorerwärmen insoweit entbehrlich ist. Das Vorerwärmen hat aber insoweit trotzdem einen Wert, als daß dem Auftreten von Spannungen und der Bildung von Kapillaren im Verschlußbereich durch entweichende Luft entgegengewirkt werden kann und die sich ergebende Kopf- bzw. Kappengeometrie (insbesondere Wandstärke im Verschlußbereich) positiv beeinflußt werden kann.

Das Vorerwärmen der Ampulle kann ebenfalls mit Laserstrahlung erfolgen. Hierzu kann der Vorerwärmungseinrichtung bzw. der Verschließstation wenigstens ein Laser zugeordnet sein. Es kann sich dabei um einen eigenen, nur für die Vorerwärmung dienenden Laser handeln oder um einen Laser, der sowohl zum Verschließen als auch zum Vorerwärmen dient. Man wird hier die Lösung wählen, die im Hinblick auf die zu erzielenden Bearbeitungszeiten am kostengünstigsten ist. Das Vorerwärmen kann mit anderer oder auch der gleichen Laserleistung als das eigentliche Verschließen erfolgen.

Die Vorerwärmung kann aber auch unter Verwendung wenigstens einer nicht-kohärenten elektromagnetischen Strahlungsquelle (je nach dem Absorptionsvermögen des Wandmaterials der eingesetzten Ampullen gegebenenfalls ein Infrarotstrahler) oder/und einer Heizelementanordnung, insbesondere Heizwendelanordnung, erfolgen, wofür die Vorerwärmungseinrichtung bzw. die Verschließstation entsprechend ausgebildet sein können. Eine Vorerwärmung mittels Laserstrahlung ist aber bevorzugt.

Für kurze Bearbeitungszeiten, insbesondere kurze Taktzeiten im Falle einer getakteten Einrichtung kann die Vorerwärmung während einer Transportphase der jeweiligen Ampulle erfolgen, insbesondere während des Transports der Ampulle von der Füllstation zur Verschließstation. Generell kann die Vorerwärmung oder/und das Verschließen wenigstens teilweise bei entlang einer Förderstrecke (die Ampullen-Förderstrecke}bewegter Ampulle erfolgen. Hierzu wird vorgeschlagen, daß dem wenigstens einen Laser zugeordnete Strahlführungsmittel geeignet sind, die Laserstrahlung entsprechend einer Fortbewegung der Ampulle durch die Fördereinrichtung nachzuführen. Das Nachführen der Laserstrahlung ist gegenüber einer an sich ebenfalls möglichen Bewegung, ggf. Verschwenkung, des Lasers selbst bevorzugt, da der mechanische Aufwand im ersten Falle niedriger ist. Entsprechende Strahlführungsmittel stehen dem Fachmann in großer Zahl zur Verfügung, es wird beispielsweise an Schwenkspiegel, Scanner, Polygonspiegelräder und dergleichen gedacht.

Die Ampulle kann beim Verschließen oder/und Vorerwärmen wenigstens aus zwei Richtungen mit Laserstrahlung bestrahlt werden. Hierzu können wenigstens zwei Laser derart angeordnet sein oder/und können dem wenigstens einen Laser entsprechende Strahlführungsmittel zugeordnet sein. Hierdurch kann eine gleichmäßige Erwärmung der Ampulle bzw. des Ampullenspießes in Umfangsrichtung erreicht werden, ohne daß eine Rotation der Ampullen um eine Ampullenachse erforderlich ist. Durch die gleichmäßige Erwärmung wird dem Auftreten von Spannungen im erkaltenden bzw. erkalteten Wandmaterial entgegengewirkt.

Man kann aber auch die jeweilige Ampulle beim Verschließen oder/und Vorerwärmen um eine Ampullenachse rotieren lassen, unabhängig davon, ob die Laserstrahlung aus einer Richtung oder aus mehreren Richtungen auf die Ampulle gestrahlt wird. Sieht man eine Bestrahlung der Ampulle nur aus einer Richtung vor, so wird durch das Rotierenlassen der Ampulle trotzdem eine gleichmäßige Erwärmung erreicht, so daß die Ampulle zuverlässig verschlossen werden kann, ohne daß wesentliche Spannungen im Ampullenkopf auftreten. In bezug auf die erfindungsgemäße Einrichtung wird deshalb vorgeschlagen, eine entsprechende Ampullenrotationseinrichtung vorzusehen.

Je nach der in die Ampulle abzufüllenden bzw. abgefüllten Substanz mag es beispielsweise in bezug auf eine ausreichende Haltbarkeit oder zur Vermeidung von Oxidation zweckmäßig sein, die Ampulle mit Schutzgas, beispielsweise Stickstoff, zu begasen. Die Ampulle kann also vor dem Verschließen, insbesondere vor oder/und während dem Füllen, während des Vorerwärmens oder/und während des Verschließens, begast werden. Hierzu kann die erfindungsgemäße Einrichtung mit einer Begasungseinrichtung versehen werden zum Begasen der Ampullen während des Füllens oder/und während des Transports der Ampullen von der Füllstation zur Verschließstation oder/und während der Vorerwärmung oder/und während des Verschließens. Im Falle der mechanischen Einwirkung durch Bearbeitungsgas wird man in der Regel als Bearbeitungsgas das gleiche Gas wie für die Begasung verwenden.

Die Begasungseinrichtung kann eine Begasungsnadel aufweisen, die dafür ausgebildet ist, zur Begasung einer jeweiligen Ampulle durch die zu verschließende Ampulleneinfüllöffnung in die Ampulle bis zum Erreichen einer Eintauchstellung einzutauchen. Die Begasungsnadel kann eine Gasauslaßöffnung aufweisen, die in der Eintauchstellung tiefer als die Bestrahlungsstelle der Ampulle, an der diese mit Laserstrahlung bestrahlt wird, liegt. Bevorzugt ist während der Vorerwärmung oder/und während einer Anfangsphase des Verschließens Gas durch die in der Eintauchstellung angeordnete Begasungsnadel in die Ampulle einführbar. Es wird also vorgeschlagen, während des Vorerwärmens oder/und während einer Anfangsphase des Verschließens Gas durch die Auslaßöffnung der Begasungsnadel in die Ampulle einzuführen, wobei die Auslaßöffnung tiefer als die Bestrahlungsstelle der Ampulle liegt. Durch die gezielte und genau steuerbare Laserstrahlungseinwirkung kann zuverlässig verhindert werden, daß die Begasungsnadel beschädigt oder das Verschließen der Ampulle durch die Begasungsnadel behindert wird. Vor dem Verschließen der Ampulle durch zusammenlaufendes Wandmaterial bzw. durch Abziehen des Spießes kann die Begasungsnadel rechtzeitig aus der Ampulle zurückgezogen werden. Gegebenenfalls kann man auch die Bestrahlung mit Laserstrahlung für die Begasung mit der Nadel kurzzeitig unterbrechen. Eine übermäßige Erhitzung der Begasungsnadel und ein Verlust von Wärmeenergie für den Erschmelzungsvorgang kann dadurch verhindert werden, daß die Begasungsnadel verspiegelt ist, so daß sie als Spiegel für Laserstrahlung oder/und als Spiegel für von dem Ampullenwandmaterial ausgestrahlte Wärmestrahlung dient.

Die mit einer derartigen Einrichtung zu bearbeitenden, also zu füllenden und zu verschließenden Ampullen können der Einrichtung in einem Zustand mit fertig ausgebildeter Ampulleneinfüllöffnung zugeführt werden. Die Ampullen werden also durch den Ampullenhersteller von vornherein mit Ampulleneinfüllöffnung hergestellt. Es können aber auch Ampullen eingesetzt werden, die im geschlossenen Zustand angeliefert werden, die also vom Ampullenhersteller bei der Herstellung verschlossen werden und dementsprechend (noch) keine Ampulleneinfüllöffnung aufweisen. Während des Transports der Ampullen etwa zum Pharmahersteller ist somit eine Kontamination des Ampulleninneren zuverlässig ausgeschlossen. Damit mit der Einrichtung derartige Ampullen verarbeitet werden können, kann die Einrichtung eine Öffnungsstation aufweisen, die die der Ampullenfüll- und -verschließeinrichtung in geschlossenem Zustand zugeführten Ampullen vor der Zufuhr zur Füllstation öffnet. Da das Öffnen erst unmittelbar vor der Zufuhr zur Füllstation erfolgt, ist gegenüber von vornherein offenen Ampullen der apparative und handhabungsmäßige Aufwand reduziert, da ein Waschen oder/und Sterilisieren entfallen kann.

Angesprochen wird damit ein Verfahren zum Öffnen einer geschlossenen Ampulle durch Aufschmelzen einer Ampullen-Einfüllöffnung, ggf. als Teil eines Ampullen-Behandlungsverfahrens umfassend ein Verfahren zum Verschließen einer Ampulle durch Zuschmelzen einer Ampullenöffnung unter Einwirkung von Laserstrahlung. Hierzu wird mit Anspruch 6 erfindungsgemäß vorgeschlagen, die Ampullen-Einfüllöffnung unter Einwirkung von Laserstrahlung aufzuschmelzen, ggf. mit zusätzlichem Einsatz eines mechanischen Werkzeugs zur Öffnungserweiterung oder/und zum Abtrag geschmolzenen Ampullenwandmaterials. In bezug auf die Öffnungsstation wird dementsprechend erfindungsgemäß vorgeschlagen, daß dieser wenigstens ein Laser zugeordnet ist zum Öffnen der Ampullen unter Einwirkung von Laserstrahlung. Die Erfindung stellt damit die in Anspruch 1 definierte Einrichtung bereit.

Besonders zweckmäßig ist, das Ampullenöffnen in wenigstens drei Stufen durchzuführen. Eine Vorerwärmungsstufe dient dazu, einen Unterdruck in der geschlossenen Ampulle abzubauen, damit beim Öffnen der Ampulle keine Umgebungsluft bzw. Umgebungsgas eingesaugt wird. Hieran kann sich eine Überdruckablaßstufe anschließen, um den Überdruck in' der Ampulle abzubauen. Hierzu kann eine (vergleichsweise kleine) Ausgleichsöffnung in der Ampulle durch Laserstrahlung erzeugt werden. Beispielsweise kann man einen hochenergetischen Laserpuls verwenden, der die Ausgleichsöffnung in der Ampullenwand durch Verdampfen von Ampullenwandmaterial herstellt. Anschließend kann in einer Öffnungsstufe die eigentlichen Ampulleneinfüllöffnung durch Laserstrahlung erzeugt werden, ggf. mit zusätzlichem Einsatz eines mechanischen Werkzeugs zur Öffnungserweiterung oder/und zum Abtrag geschmolzenen Ampullenwandmaterials.

Das Abfüllen der Ampullen, das Verschließen oder/und das Öffnen der Ampullen kann unter gegenüber Umgebungseinflüssen abgeschirmten Bedingungen, beispielsweise Reinraumbedingungen oder/und Luft-Laminarfluß-Bedingungen erfolgen, beispielsweise wenn höhere Anforderungen an die Reinheit und Sterilität zu erfüllen sind. Hierzu kann die Einrichtung eine Abschirmungskammer aufweisen, in der die Füllstation, die Verschließstation und die Öffnungsstation angeordnet sind. Grundsätzlich kann der wenigstens eine Laser innerhalb der Abschirmungskammer angeordnet sein. Es ist aber bevorzugt, daß der wenigstens eine Laser außerhalb der Abschirmungskammer angeordnet ist und die Laserstrahlung durch eine für die Laserstrahlung durchlässige Fensteranordnung in die Abschirmungskammer zugeführt wird. Hierdurch wird erreicht, daß der Laser gut zugänglich angeordnet sein kann, ohne daß bei einer Wartung oder Justierung des Lasers Schmutz oder Keime in den Bereich der Füllstation, der Verschließstation und der Öffnungsstation hineingetragen werden. Auch wird verhindert, daß Ausgasungen von Dichtungskomponenten und dergleichen des Lasers in den Bereich der genannten Stationen gelangen. Bevorzugt handelt es sich bei der Abschirmungskammer um eine Reinraumkammer oder/und Luft-Laminarfluß-Kammer.

Die erfindungsgemäße Ampullenfüll- und -verschließeinrichtung kann jedenfalls mit ihrer Füllstation, ihrer Verschließstation und ihrer Öffnungsstation in einem Raum höherer Luftqualität, insbesondere Reinraum, angeordnet sein, wohingegen der Laser vorzugsweise in einem Nachbarraum, beispielsweise Waschraum, geringerer Luftqualität angeordnet ist. Der Laser kann im letztgenannten Fall beispielsweise durch Wartungspersonal des Laserherstellers gewartet werden, ohne daß befürchtet werden muß, daß Schmutz oder Keime in den Raum höherer Luftqualität hineingetragen werden.

Dem wenigstens einen Laser kann eine Laserstrahlformungsanordnung zugeordnet sein oder in den Laser kann eine Laserstrahlformungsanordnung integriert sein, um eine vorbestimmte Intensitätsverteilung der auf die jeweilige Ampulle wirkenden Laserstrahlung während der Vorerwärmung oder/und während des Verschließens oder/und während des Öffnens vorzusehen. Die Intensitätsverteilung kann in bezug auf die Geometrie (insbesondere Ampullengröße, Wandstärke) und das Ampullenwandmaterial abgestimmt sein, um das Verschließen der Ampulle zu optimieren. Ziel ist es, eine ausreichende Wandstärke des Ampullenkopfes ohne wesentliche Spannungen im Material nach dem Erkalten zu erreichen. Die Laserstrahlform ist hier ein wichtiger Parameter, der empirisch für den jeweils zu verschließenden Ampullentyp abgestimmt werden kann. Beispielsweise ist es denkbar, daß eine elliptische Intensitätsverteilung mit Orientierung der Ellipsenlängsachse parallel zur Ampullenlängsachse zumindest für gewissse Ampullenformate vorteilhaft ist, um die Kopfform und Materialstärke im Kopf zu optimieren. Es ist auch denkbar, zwei in Längsrichtung der Ampulle im Abstand angeordnete Laserbrennflecke vorzusehen, um einerseits die Erwärmung zu konzentrieren und andererseits gleichwohl eine Erschmelzungszone ausreichender Größe vorzusehen. Es bestehen hier viele Möglichkeiten, und allgemeine Aussagen sind aufgrund der verschiedenen existierenden Ampullenformate nur schwer möglich.

Ferner wird vorgeschlagen, daß dem wenigstens einen Laser eine Laserstrahlführungsanordnung zugeordnet ist, um die Laserstrahlung entsprechend einer Förderbewegung der jeweiligen Ampulle entlang der Förderstrecke nachzuführen, oder/und die Laserstrahlung beim Abziehen des jeweiligen Ampullenspießes in Spießabziehrichtung nachzuführen oder derart umzulenken, daß die Ablösung des Spießes von der übrigen Ampulle, insbesondere ein Unterbrechen eines beim Abziehen ggf. entstehenden Materialfadens, gefördert wird, oder/und die Laserstrahlung nach Verschließen der jeweiligen Ampulle, insbesondere nach dem Abziehen des Ampullenspießes, oder/und nach dem Öffnen der Ampulle zu einer nachfolgenden Ampulle weiterzuleiten. Die Laserstrahlführungsanordnung kann gleichzeitig Laserstrahlformungseigenschaften aufweisen, so daß allgemein von einer Laserstrahlformungs- und -führungsanordnung gesprochen werden kann.

Als bevorzugte Weiterbildung wird vorgeschlagen, daß beim Verschließen oder/und beim Vorerwärmen der jeweiligen Ampulle eine Reflexionsanordnung zugeordnet ist, die von der Ampulle ausgehende Strahlung, insbesondere Wärmestrahlung oder/und von der Ampulle reflektierte Laserstrahlung, zur Ampulle zurückreflektiert oder/und die Laserstrahlung in Richtung zur Ampulle umlenkt oder/und auf einem Ampullenabschnitt konzentriert. Durch die Rückreflektion von Wärmestrahlung bzw. von der Ampulle reflektierter Laserstrahlung wird dafür gesorgt, daß die Energie der Laserstrahlung gut ausgenutzt wird und dementsprechend kurze Einwirkungszeiten für die Laserstrahlung möglich sind. Im Falle eines Spießabzugs kann die Reflexionsanordnung in ein Spießabzugsglied, insbesondere Spießabzugszange, integriert sein. Zusätzlicher mechanischer Aufwand für eine Halterung und ggf. Hinbewegung oder Mitführbewegung der Reflexionsanordnung zur bzw. mit der Ampulle ist somit unnötig.

Es kann der jeweils zu verschließenden Ampulle eine Erfassungseinrichtung zugeordnet sein zum Erfassen einer von der Ampulle ausgehenden Prozeßstrahlung, insbesondere Wärmestrahlung oder/und auf Relaxation von Anregungszuständen zurückgehende Strahlung, um während oder/und nach der Vorerwärmung oder/und während dem Verschließen oder/und beim Öffnen einen Behandlungzustand der jeweiligen Ampulle zu bestimmen. Der Behandlungszustand kann beispielsweise der Erwärmungsgrad (Temperatur) der Ampulle im für das Verschließen maßgeblichen Bereich sein. Dieser Behandlungszustand kann ausgewertet werden, um wenigstens einen Eigenparameter der Ampulle oder/und des Ampullenmaterials (beispielsweise Materialstärke oder/und Geometrie oder/und Fluidzustand oder/und Einfärbung des Ampullenwandmaterials) zu bestimmen. Aus der Auswertung der Prozeßstrahlung ist also ein Rückschluß auf die jeweils behandelte Ampulle möglich. Dies ist dann günstig, wenn verschiedene Ampullentypen oder Ampullen mit unterschiedlicher Füllung oder Füllmenge verschlossen werden sollen. Eine Sortierung der Ampullen, ggf. Spießsortierung, vor dem Füllen und Verschließen ist deshalb unnötigt. Auch kann die erfindungsgemäße Einrichtung damit für Ampullen eingesetzt werden, die hinsichtlich ihrer Geometrie, Wandstärke usw. vergleichsweise stark streuen, weil bei der Herstellung weniger enge Toleranzen eingehalten wurden. In solch einem Fall oder im Falle der Bearbeitung von Ampullen gemischter Sortierung kann beispielsweise der Behandlungszustand, insbes. die Temperatur, der Ampulle nach der Vorerwärmung bestimmt werden. In Abhängigkeit von dem erfaßten Behandlungszustand kann dann beispielsweise die Laserleistung eingestellt werden, die beim nachfolgenden Verschließen der Ampulle angewendet wird. Ist die Temperatur noch nicht so hoch, etwa weil die Materialstärke und dementsprechend die Wärmekapazität der Ampulle relativ groß ist, so kann für das Verschließen eine höhere Laserleistung eingestellt werden. Ist andererseits nach der Vorerwärmung schon eine relativ hohe Temperatur erreicht, weil etwa die Materialstärke und dementsprechend die Wärmekapazität geringer ist, reicht für das Verschließen eine geringere Laserleistung aus und eine zu hohe Laserleistung mag sogar im Hinblick auf eine optimale Kuppe der Ampulle schädlich sein, da hierdurch Wandmaterial (insbesondere Glas) verdampft werden könnte. Allgemein gesprochen, kann wenigstens ein Betriebsparameter der Einrichtung, insbesondere des wenigstens einen Lasers bzw. wenigstens ein Verfahrensparameter in Abhängigkeit von'dem Behandlungszustand einstellbar sein.

Es kommen diverse Betriebs- bzw. Verfahrensparameter in Betracht, die für eine Optimierung des Verschließens einstellbar sind, wobei die Einstellung ggf. in Abhängigkeit vom Behandlungszustand der jeweiligen Ampulle oder/und ggf. in Abhängigkeit von einem zeitlichen Behandlungsprogramm für die jeweilige Ampulle eingestellt wird. Ohne eine abschließende Aufzählung geben zu wollen, wird beispielsweise an die folgenden Betriebsparameter bzw. Verfahrensparameter gedacht:
mittlere Leistung der Laserstrahlung beim Vorerwärmen oder/und beim Verschließen oder/und beim Öffnen,
im Falle eines Pulslasers: Pulsfrequenz oder/und Pulsenergie der Laserstrahlung beim Vorerwärmen oder/und beim Verschließen oder/und beim Öffnen,
Bereich der Ampulle, auf den während des Verschließens mit Laserstrahlung eingewirkt wird,
im Falle des Spießabziehens: Spießabziehgeschwindigkeit oder/und Abstimmung des Abziehzeitpunkts in Bezug auf den Beginn der Lasereinwirkung für das Verschließen,
im Falle der Vorerwärmung: Vorerwärmungsdauer oder/und zeitliche Abstimmung des Beginns des Verschließens oder/und Bereich der Ampulle, auf den während der Vorerwärmung eingewirkt wird,
im Falle der Ampullenrotation: Rotationsgeschwindigkeit der jeweiligen Ampulle beim Vorerwärmen oder/und beim Verschließen,
Intensitätsverteilung der Laserstrahlung auf der jeweiligen Ampulle,
Zufuhr von Bearbeitungsgas oder/und Begasungsgas.

Im Hinblick auf eine zur Qualitätssicherung ggf. gewünschte Aufzeichnung von Betriebsparametern der Einrichtung während des Füllens und Verschließens von Ampullen und von Behandlungszuständen der Ampullen im Verlauf ihrer Bearbeitung ist es vorteilhaft, wenn die erfindungsgemäße Einrichtung eine Aufzeichnungseinrichtung für diesen Zweck aufweist. Damit lassen sich Verfahrensparameter oder/und Behandlungszustände auf einfache Weise aufzeichnen und stehen als Nachweis für einen ordnungsgemäßen Betrieb der Anlage und als Arbeitsgrundlage für eine Optimierung der Verfahrensparameter zur Verfügung.

Bei der erfindungsgemäßen Ampullenfüll- und -verschließeinrichtung kann es sich um eine Einrichtung handeln, die in bezug auf die Förderung der Ampullen längs der Ampullen-Förderstrecke kontinuierlich arbeitet mit sich mit den Ampullen längs eines jeweiligen Förderstreckenabschnitts mitbewegenden Behandlungsorganen oder/und Nachführung der Laserstrahlung entsprechend der Ampullenbewegung. Es kann sich alternativ aber auch um eine Einrichtung handeln, die in bezug auf die Förderung der Ampullen längs der Ampullen-Förderstrecke taktweise arbeitet mit stationären Behandlungsorganen oder/und zumindest zeitintervallweise fester Laserstrahlungsführung, ggf. mit Umschaltung zwischen mehreren Laserstrahlungsführungswegen.

Hinsichtlich des Verlaufs der Ampullen-Förderstrecke sind diverse Varianten denkbar. Beispielsweise kann die Ampullen-Förderstrecke zumindest abschnittsweise linear sein. Eine besonders vorteilhafte Ausbildung sieht vor, daß wenigstens ein linearer Förderstreckenabschnitt parallel zu einer Laserstrahlungsstrecke verläuft, derart, daß von wenigstens einer sich entlang der Förderstrecke bewegenden Ampulle wenigstens eine wenigstens von einer Seite mit entlang der Laserstrahlungsstrecke propagierender Laserstrahlung bestrahlt wird. Man kann dann mit stationären Laserstrahlungsstrecken arbeiten, braucht also keine Laserstrahlnachführung oder Umschaltung zwischen verschiedenen Laserstrahlungsführungswegen, wenn die Ampullen derart gefördert werden, daß sie entsprechend eines bestimmte Laserstrahlungseinwirkung vorsehenden Behandlungsprogramms in die Laserstrahlung hineinbewegt und wieder aus der Laserstrahlung herausbewegt werden. Die einfachste Variante ist, daß eine Ampulle am Beginn des linearen Förderstreckenabschnitts in die Laserstrahlung eintritt und am Ende des linearen Förderstreckenabschnitts die Ampulle eine derartige Wechselwirkung mit der Laserstrahlung und ggf. zusätzlichen Bearbeitungseinwirkungen (etwa Behandlungsgas oder/und Spießabzug) erfahren hat, daß sie an diesem Ende verschlossen ist. Auf Grundlage des Grundprinzips, daß ein linearer Förderstreckenabschnitt sich auf die angegebene Art und Weise parallel zu einer Laserstrahlungsstrecke erstreckt, sind viele vorteilhafte Varianten möglich. Dieses Grundprinzip ist sowohl für getaktete als auch für kontinuierlich arbeitende Anlagen geeignet.

In diesem Zusammenhang ist noch zu erwähnen, daß nicht nur eine Förderbewegung der Ampullen dazu ausgenutzt werden kann, diese mit Laserstrahlung in Wechselwirkung zu bringen, also in einen Einwirkungsbereich der Laserstrahlung hineinzubewegen, und die Wechselwirkung mit der Laserstrahlung zu beenden, also die Ampullen aus dem Einwirkungsbereich der Laserstrahlung hinauszuführen. Eine weitere Möglichkeit ist, durch eine Kipp- oder Schwenkbewegung der jeweiligen Ampulle, die ggf. einer Förderbewegung überlagert ist, die Ampulle bzw. einen der Laserstrahlung auszusetzenden bzw. ausgesetzten Abschnitt der Ampulle in den Einwirkungsbereich der Laserstrahlung hineinzubewegen bzw. aus diesem herauszubewegen, so daß ein Ein/Ausschalten der Laserstrahlung bzw. ein Umschalten zwischen verschiedenen Laserstrahlungsführungswegen entbehrlich ist. Es wird insbesondere daran gedacht, dieses Prinzip dazu zu verwenden, eine fertig verschlossene Ampulle aus der Laserstrahlung herauszuschwenken oder zu kippen, wenn sie keiner weiteren Laserstrahlung mehr ausgesetzt werden soll. Dieses Prinzip alleine oder eine Kombination dieses Prinzips mit dem vorerwähnten Prinzip der Hineinbewegung bzw. Herausbewegung der Ampulle aufgrund einer Förderbewegung eröffnet viele Möglichkeiten, erfindungsgemäße Anlagen vorteilhaft auszulegen.

Als Alternative oder ggf. auch in Kombination mit einer abschnittsweise linearen Ausbildung der Ampullen-Förderstrecke wird vorgeschlagen, daß die Ampullen-Förderstrecke zumindest bereichsweise gekrümmt ist, insbesondere zumindest abschnittsweise kreisbogenförmig ist. Vom mechanischen Aufwand her ist es besonders einfach, wenn die Fördereinrichtung eine Rundläufereinrichtung mit einem Rundläufer umfaßt, der den kreisbogenförmigen Abschnitt der Ampullen-Förderstrecke definiert. In eine solche Rundläufereinrichtung kann eine Laserstrahlführungsanordnung oder/und eine Laserstrahlreflexionsanordnung integriert sein, wodurch sich eine große Kompaktheit ohne großen mechanischen Aufwand realisieren läßt.

Es wurde schon mehrfach von Strahlführungs- oder/und Strahlformungsmitteln gesprochen. Diese Mittel können wenigstens eine der folgenden Baugruppen umfassen: eine diffraktive Optik, beispielsweise ein holographisches Element; eine refraktive Optik, beispielsweise eine Linsenanordnung; eine Schwenkspiegelanordnung ggf. mit einem Planfeldobjektiv, beispielsweise ein Scanner; ein Reflexionsflächenrad, beispielsweise ein Polygonrad; ein Reflexionsflächenschwenkelement; einen Lichtwellenleiter; eine Umlenkspiegelanordnung; eine Strahlteileranordnung. Generell kann gesagt werden, daß das gesamte Arsenal an in der angewandten Optik und Lasertechnik eingesetzten optischen Komponenten zum Einsatz kommen kann.

Für eine hohe Füll- und Verschließleistung der erfindungsgemäßen Einrichtung wird vorgeschlagen, daß die Füllstation, die Verschließstation und die Öffnungsstation geeignet sind, simultan mehrere Ampullen zu behandeln bzw. zu bearbeiten. Hierzu können die genannten Stationen jeweils mehrere dem gleichen Zweck dienende Organe aufweisen, beispielsweise eine Mehrzahl von Füllorganen im Falle der Füllstation, eine Mehrzahl von Verschließorganen, insbesondere Spießabzugsgliedern, im Falle der Verschließstation usw. Auch weitere Komponenten, etwa Begasungsnadeln, Behandlungsgaszuführeinrichtung usw., können entsprechend in mehrfacher Ausführung vorgesehen werden. Hinsichtlich der Laserstrahlung bestehen mehrere Möglichkeiten. So kann man einen entsprechend starken Laser vorsehen, dessen Laserstrahlung durch eine Strahlteileranordnung in die benötigte Anzahl von Teillaserstrahlen aufgeteilt wird. Man kann aber auch eine Mehrzahl von Lasern vorsehen. Man wird hier zu derjenigen Lösung greifen, die hinsichtlich Herstellungskosten und Wartungskosten am günstigsten erscheint. Ein einziger Laser hätte den Vorteil, daß nur ein Laser gewartet und justiert werden muß. Dafür ist aber ein Laser hoher Leistung vergleichsweise teuer. Möglicherweise ist es aufgrund der relativ hohen Investitionskosten für einen sehr leistungsstarken Laser besser, eine Mehrzahl von Lasern entsprechend niedriger Leistung vorzusehen. Dies hätte auch den Vorteil, daß im Falle eines - im Normalfall aber nicht zu erwartenden - Ausfalls eines Lasers noch ein Notbetrieb der Ampullenfüll- und -verschließeinrichtung möglich wäre.

Gemäß einer bevorzugten Weiterbildung weist die Ampullenfüll- und -verschließeinrichtung eine Markierungs-oder/und Beschriftungseinrichtung zum Markieren oder/und Beschriften von Ampullen unter Einsatz von Laserstrahlung auf. Hierzu kann ein gesonderter Markierungs/Beschriftungslaser eingesetzt werden oder - diese Ausbildung ist bevorzugt - es kann ein Teil der Laserstrahlung der sowieso vorgesehenen Laseranordnung abgezweigt werden, um durch entsprechende Strahlführungs- und Strahlformungsmittel einen Beschriftungs/Markierungsstrahl zu bilden, der beispielsweise mittels eines Scanners zum Markieren oder/und Beschriften der Ampullen eingesetzt wird. Eine gesonderte Markierung oder Beschriftung der Ampullen beispielsweise durch Etiketten ist dann evtl. nicht nötig. Selbst wenn zusätzlich Klebeetiketten oder dergleichen mit detaillierterer Information vorgesehen sind, so kann doch durch die Markierung oder Beschriftung unmittelbar im Zuge des Füllens und Verschließens bzw. unmittelbar im Anschluß auf das Verschließen eine Verwechslung von Ampullen verhindert werden. Auch wird durch das Einschreiben von Markierungen oder Beschriftungstexten in das Ampullenwandmaterial durch die Laserstrahlung die einzelne Ampulle eindeutig gekennzeichnet, ohne daß diese Kennzeichnung nachträglich noch ohne Spuren zurückzulassen entfernbar ist. Eine Umetikettierung wird hierdurch zumindest nachweisbar und der Hersteller kann auf den Vertriebsweg von Ampullen rückschließen, sollten Ampullen auf eine vom Hersteller nicht vorgesehene Art und Weise weitervertrieben werden.

Bei dem wenigstens einen Laser handelt es sich um einen Laser, der hinsichtlich seiner Emissionswellenlängen und Laserleistung auf die verwendeten Ampullen abgestimmt ist. Im Falle von Glasampullen (es wird vor allem an medizinische Glasampullen gedacht) ist der Einsatz eines Infrarotlasers, beispielsweise CO₂-Lasers oder Neodym-YAG-Lasers vorteilhaft. Insbesondere mit der Infrarotlaserstrahlung von wenigstens einem CO₂-Lasers wurden hervorragende Verschließergebnisse erzielt. Da die Emissionswellenlänge von CO₂-Lasern bei 10,6 µm liegt, sind Ampullen aus allen üblichen Glassorten dafür geeignet, mittels CO₂-Laserstrahlung verschlossen zu werden.

Zu erwähnen ist noch, daß es sich bei dem bevorzugt eingesetzten CO₂-Laser um einen sogenannten "Field-Off-Laser" handeln kann, dervorteilhafte Betriebseigenschaften aufweist und sich gut in eine maschinelle Einrichtung integrieren läßt. Ferner ist noch zu erwähnen, daß ein Monomode-Betrieb des eingesetzten Lasers nicht erforderlich ist, so daß auf Raumgitter und dergleichen im Laser verzichtet werden kann, so daß eine vergleichsweise kostenkünstige Beschaffung des Lasers möglich ist.

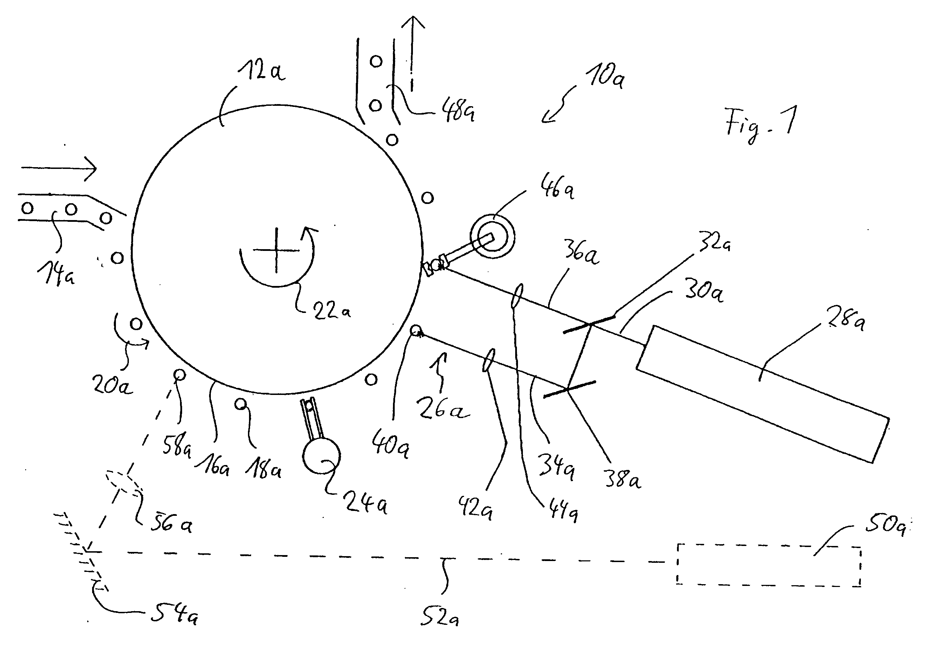

Die Erfindung und ihre verschiedenen Aspekte werden nachfolgend anhand von mehreren in den Figuren gezeigten Ausführungsbeispielen näher erläutert. Es wird darauf hingewiesen, dass eine erfindungsgemäße Öffnungsstation zum Öffnen von Ampullen unter Einwirkung von Laserstrahlung nur beim Ausführungsbeispiel der Fig. 1 konkret gezeigt ist.
- Fig. 1: zeigt eine Draufsicht auf eine erfindungsgemäße Ampullenfüll- und -verschließeinrichtung des getakteten Rundläufertyps.
- Fig. 2: zeigt schematisch eine Seitenansicht der Einrichtung der Fig. 1 mit Anordnung des Rundläufers in einer Einhausung und außerhalb der Einhausung angeordnetem Laser.
- Fig. 3: zeigt eine Variante der Einrichtung der Fig. 2 mit innerhalb der Einhausung angeordnetem Laser.
- Fig. 4: zeigt eine weitere Variante der Einrichtung der Fig. 2 mit auf einem Einhausungsdach angeordnetem Laser.
- Fig. 5: zeigt ein Ausführungsbeispiel einer Ampullenfüll- und -verschließeinrichtung des Rundläufertyps, wobei der Rundläufer kontinuierlich oder getaktet arbeiten kann.
- Fig. 6: zeigt ein weiteres Ausführungsbeispiel einer Ampullenfüll- und -verschließeinrichtung des Rundläufertyps mit in den Rundläufer integrierter Strahlungsführungsanordnung, wobei es sich um eine kontinuierlich oder getaktet arbeitende Einrichtung handeln kann.
- Fig. 7: zeigt ein Ausführungsbeispiel einer Ampullenfüll- und -verschließeinrichtung mit linearer Förderstrecke, wobei es sich um eine kontinuierlich oder getaktet arbeitende Einrichtung handeln kann.
- Fig. 8: zeigt eine Variante der in Fig. 7 gezeigten Einrichtung.
- Fig. 9: zeigt ein weiteres Ausführungsbeispiel einer Ampullenfüll- und -verschließeinrichtung, die zwei gesonderte Ampullen-Förderstrecken mit jeweiliger Füllstation und Verschließstation aufweist, wobei jeweils ein linearer Förderstreckenabschnitt entlang einer Laserstrahlungsstrecke verläuft.
- Fig. 10: zeigt eine Variante der Einrichtung der Fig. 9.
- Fig. 11: zeigt in Fig. 11a und Fig. 11b zwei weitere Varianten der Einrichtung der Fig. 9.
- Fig. 12: zeigt ein weiteres Ausführungsbeispiel einer Ampullenfüll- und -verschließeinrichtung des Rundläufertyps mit einer in den Rundläufer integrierten Laserstrahlführungsanordnung und einer einer gerade behandelten Ampulle zugeordneten Rückreflexionsanordnung zum Zurückreflektieren von von der Ampulle ausgehender Strahlung.
- Fig. 13: zeigt die Rückreflexionsanordnung der Einrichtung der Fig. 12 im Detail.
- Fig. 14: zeigt eine (ggf. auch als Rückreflexionsanordnung im Sinne der Anordnung der Fig. 13 dienende) Strahlführungsanordnung zur Bestrahlung einer Ampulle von mehreren Seiten mit Laserstrahlung ohne Notwendigkeit einer Ampullenrotation.
- Fig. 15: veranschaulicht in den Teilfiguren Fig. 15a - Fig. 15h den Ablauf eines Ampullenbehandlungsprogramms ausgehend von einer im geschlossenen Zustand angelieferten Ampulle (Fig. 1 5a) bis zur nach Herstellung einer Einfüllöffnung befüllten und wieder verschlossenen Ampulle (Fig. 15h).
- Fig. 16: zeigt eine Abwandlung des Verschließvorgangs entsprechend Fig. 15g mit Spießabzug.
- Fig. 17: veranschaulicht das Verschließen einer Ampulle ohne Spießabzug.
- Fig. 18: veranschaulicht das Verschließen einer Ampulle ohne Spießabzug durch Bestrahlung eines Ampullenhalses von mehreren Seiten mit Laserstrahlung unter mechanischer Einwirkung eines Behandlungsgases.
- Fig. 19: veranschaulicht die Integration einer Wärmestrahlung rückreflektierenden Spiegelanordnung in eine Spießabzugsvorrichtung.
- Fig. 20: veranschaulicht die Integration einer zur Bestrahlung eines Ampullenhalses von mehreren Seiten dienenden Spiegelanordnung in eine Spießabzugsvorrichtung.
- Fig. 21: veranschaulicht in den Teilfiguren Fig. 21a - 21d mehrere denkbare Varianten für eine Intensitätsverteilung der auf einen Ampullenhals (Ampullenspieß) einwirkenden Laserstrahlung beim Vorerwärmen oder/und beim Verschließen.
- Fig. 22: veranschaulicht das Beschriften einer verschlossenen Ampulle mit den Initialien "B + S" mittels eines Beschriftungslaserstrahls, der mittels einer Scanneranordnung über die Ampullenoberfläche geführt wird.
- Fig. 23: zeigt ein Diagramm, das ein Beispiel für einen taktweisen Betrieb einer Ampullenfüll- und -verschtießeinrichtung veranschaulicht.
- Fig. 24: zeigt ein weiteres Diagramm zur Veranschaulichung eines Beispiels eines taktweisen Betriebes einer Ampullenfüll- und - verschließeinrichtung mit gegenüber dem Fall der Fig. 23 verdoppelter Verschließleistung (Zahl der pro Zeiteinheit verschlossenen Ampullen).
- Fig. 25: zeigt ein Diagramm zur Veranschaulichung eines Beispiels eines kontinuierlichen Betriebs einer Ampullenfüll- und -verschließeinrichtung.

Bei der folgenden Beschreibung der verschiedenen Ausführungsbeispiele werden, sofern nicht ausdrücklich etwas anderes angegeben ist, für identische, analoge bzw. einander entsprechende Komponenten die gleichen Bezugszeichen verwendet, die von Ausführungsbeispiel zu Ausführungsbeispiel durch einen kleinen Buchstaben beginnend mit a in alphabetischer Reihenfolge ergänzt sind. Es werden jeweils nur die Unterschiede zum vorangehend schon beschriebenen Ausführungsbeispiel bzw. den vorangehend schon beschriebenen Ausführungsbeispielen erläutert; ansonsten wird ausdrücklich auf die vorangehende Beschreibung Bezug genommen.

Fig. 1 zeigt eine erfindungsgemäße Ampullenfüll-und-verschließeinrichtung des Rundläufertyps mit einem rundlaufenden Rotor 12a, der zum Fördern von Ampullen längs eines kreisbogenförmigen Förderstreckenabschnitts 16a ausgebildet ist. Dem Rundläufer werden über eine Zuführförderstrecke 14a Ampullen zugeführt, die eine Ampulleneinfüllöffnung aufweisen. Entlang des kreisbogenförmigen Förderstreckenabschnitts 16a werden die entlang des Umfangs des Rotors 12a äquidistant angeordneten Ampullen 18a durch geeignete Antriebsmittel in Rotation um eine Ampullenlängsachse (Vertikalachse) versetzt, wie durch den Pfeil 20a angedeutet ist. Selbstverständlich brauchen die Ampullen nur dort in Rotation versetzt werden, wo dies im Hinblick auf die Ampullenbearbeitung erwünscht bzw. erforderlich ist. Der Rotor 12a rotiert taktweise entgegen dem Uhrzeigersinn (Pfeil 22a) jeweils gemäß einem Drehwinkel, der dem Umfangsabstand von zwei unmittelbar aufeinander folgenden Ampullen entspricht. Fig. 1 zeigt die Ampullen an ihrer Position, die sie dann annehmen, wenn der Rotor 12a momentan still steht. Für jeden Fördertakt des Rotors 12a werden die Ampullen 18a um eine Position weiter bewegt. Auf diese Weise werden die Ampullen zuerst zu einer Füllstation 24a und dann zu einer Verschließstation 26a bewegt. Der Verschließstation ist ein Infrarotlaser 28a (vorliegend ein CO₂-Laser) zugeordnet, dessen Laserstrahl 30a durch einen Strahlteiler 32a in einen ersten Teilstrahl 34a und einen zweiten Teilstrahl 36a aufgeteilt wird. Der erste Teilstrahl 34a wird mittels eines als Strahlführungsmittel dienenden Umlenkspiegels 38a in Richtung zum Rotor 12a umgelenkt. Er trifft dort auf eine schon gefüllte Ampulle 40a in einer einem stillstehendem Rotor 12a entsprechenden Förderposition, um die Ampulle vor dem eigentlichen Verschließen vorzuerwärmen, so daß Luft oder ggf. in die Ampulle eingebrachtes Schutzgas erwärmt und entsprechend der wärmebedingten Expansion entweichen kann. Der erste Teilstrahl 34a fällt dabei durch eine als Strahlformungsmittel dienende Linse 42a, wobei die Linse 42a auch von einer speziellen Linsenanordnung oder dergleichen gebildet sein kann. Insofern symbolisiert die Linse 42a eine Strahlformungsanordnung im allgemeinsten Sinne.

Mit dem nächsten Fördertakt erreicht die gemäß der Darstellung in Fig. 1 durch den Teilstrahl 34a vorerwärmte Ampulle 40a eine Förderposition, in der der zweite Teilstrahl 36a auf die Ampulle trifft. Auch der zweite Teilstrahl 36a geht zuvor durch eine als Strahlformungsmittel dienende Linse 44a hindurch, wobei die Linse 44a wiederum für eine Linsenanordnung oder Strahlformungsanordnung stehen kann. Durch die Vorerwärmung durch den ersten Teilstrahl konnte das Gas in der Ampulle in ausreichendem Maße entweichen und konnte die Ampulle ausreichende Wärmeenergie aufnehmen, so daß nun die Ampulle durch den zweiten Teilstrahl 36a problemlos abgeschmolzen werden kann, um diese zu verschließen. Bei dem Ausführungsbeispiel der Fig. 1 wird das Verschließen dadurch abgeschlossen, daß eine Spießabzugseinrichtung 46a einen Ampullenspieß abzieht. Das Verschließen kann aber alternativ auch ohne Abziehen eines Ampullenspießes allein durch Einwirkung des zweiten Teilstrahls 36a erfolgen, wobei ggf. zusätzlich Bearbeitung auf erweichte Abschnitte des Ampullenhalses gerichtet werden kann, um durch mechanische Einwirkung ein Verlaufen/Zusammenfallen von Ampullenwandmaterial, im vorliegenden Fall Glas, zu fördern.

Nach erfolgter Verschließung durch die Verschließstation 26a wird die Ampulle zuerst durch den Rundläufer 12a und dann über eine Abführförderstrecke 48a abtransportiert, etwa zu einer Verpackungsstation. Gewünschtenfalls kann die Ampulle vor dem Abtransport durch die Abführförderstrecke 48a durch eine Etikettierstation mit einem Etikett versehen werden oder durch eine Beschriftungs- oder/und Markierungsstation beschriftet oder/und markiert werden.

Die Ampullenfüll- und -verschließeinrichtung der Fig. 1 ist auch dafür ausgebildet, in geschlossenem Zustand hergestellte Ampullen, also Ampullen ohne offene Einfüllöffnung, zu befüllen. Hierzu ist ein zweiter Infrarotlaser 50a vorgesehen, der einen Laserstrahl 52a erzeugt. Dieser Laserstrahl 52a wird mittels eines Umlenkspiegels 54a in Richtung zum Rotor 1 2a umgelenkt, derart, daß er durch eine als Strahlformungsmittel dienende Linse 56a (die wiederum für eine Linsen- oder Strahlformungsanordnung stehen kann) auf eine jeweilige Ampulle 58a trifft, die zwei Förderpositionen vor der Füllstation 24a angeordnet ist. Durch diesen Laserstrahl 52a wird eine Ampulleneinfüllöffnung erzeugt, durch die dann in der Füllstation 24a das Füllmittel (beispielsweise ein Pharmazeutikum) in die Ampulle eingefüllt wird. Ein gesonderter zweiter Laser ist entbehrlich, wenn unter Verwendung eines Strahlteilers Laserlicht des Lasers 28a zum Ampullenöffnen verwendet wird.

Während der Rotationsbewegung des Rotors 12a treffen die Laserstrahlen des Lasers 28a bzw. der Laserstrahl des Lasers 50a auf keine Ampulle, da bei diesem Ausführungsbeispiel nur eine feste Strahlführung vorgesehen ist. Man kann deshalb während des Fördertakts der Einrichtung die Laser ausschalten oder - bevorzugt - eine Shutter-Anordnung oder Laserstrahlfallenanordnung betätigen; so daß die Laserstrahlen keinen Schaden anrichten können. Man kann auch - dies ist wohl die einfachste Lösung - den Rotor einfach um seinen Umfang als Strahlfalle ausbilden, so daß die Laserstrahlen vom Rotor nicht zurückreflektiert werden und dementsprechend keine unkontrollierte Rückreflexionen zu erwarten sind. Für eine hohe Betriebssicherheit und einen hohen Personenschutz ist aber ein An- und Ausschalten des Lasers bzw. eine Betätigung einer zusätzlich vorgesehenen Shutter- oder Strahlfallenanordnung bevorzugt.

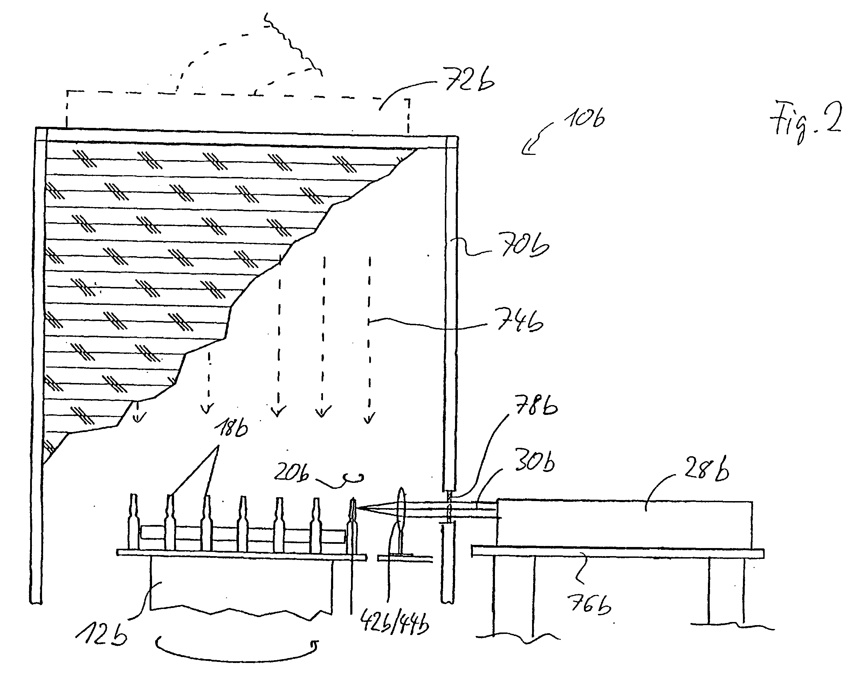

Fig. 2 veranschaulicht, wie die Ampullenfüll- und -verschließeinrichtung der Fig. 1 angeordnet sein könnte. Der Rotor 12b ist mit den Ampullen 18b und der Füllstation, der Verschließstation und ggf. der Ampullenöffnungsstation (in Fig. 2 nicht eingezeichnet) in einer Einhausung 70b angeordnet. Die Einhausung 70b bildet eine Abschirmungskammer, die auch als Isolator bezeichnet werden kann. Für hohe Anforderungen an die Sterilität und Reinheit kann die Einhausung 70b mit einer Zufuhreinrichtung 72b für gereinigte Luft versehen sein, die eine durch Pfeile 74b symbolisierte Laminarströmung im Inneren der Abschirmungskammer 70b erzeugt. Da die Laserstrahlung 30b zu einer gezielten und definierten Erhitzung der Ampullen 18b während des Vorerwärmens bzw. des Verschließens eingesetzt wird, ist keine Abfuhr von Wärme aus dem Inneren der Abschirmungskammer erforderlich, so daß die Laminarluftströmung 74b nicht gestört wird. Alternativ könnte man auch eine Abschirmungskammer vorsehen, die eine Schutzgasatmosphäre anstelle von gereinigter Luft enthält.

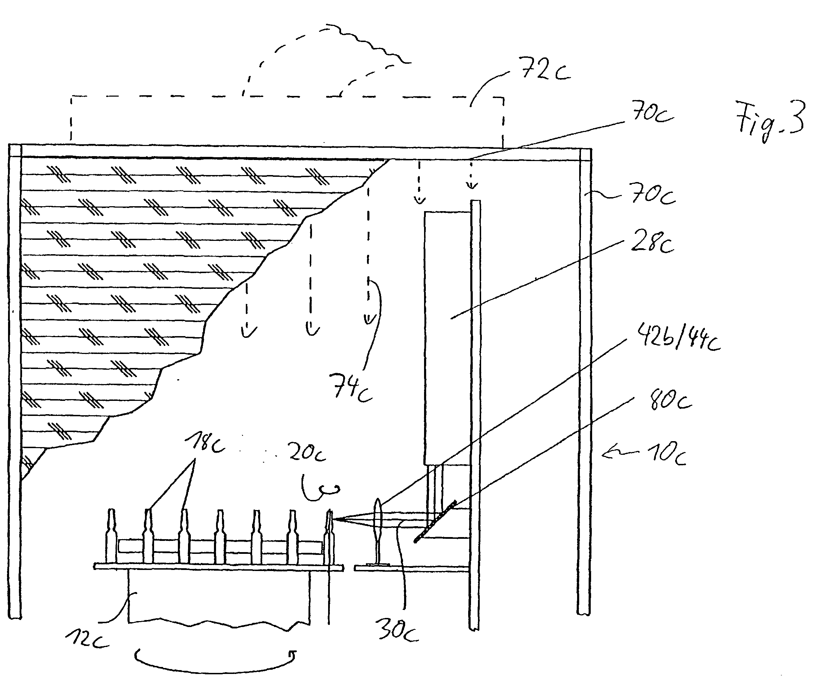

Bei der in Fig. 2 gezeigten Anordnung ist der Laser 28b außerhalb der Einhausung 70b auf einem Tragtisch 76b, ggf. einem optischen Tisch 76b, gelagert und die Laserstrahlung 30b wird durch ein für die Laserstrahlung durchsichtiges Fenster 78b ins Innere der Einhausung 70b, also ins Innere der Abschirmungskammer geführt. Dies weist gegenüber der in Fig. 3 als Alternative gezeigten Anordnung des Lasers im Inneren der Einhausung den großen Vorteil auf, daß der Laser für Justier- und Wartungsarbeiten zugänglich ist, ohne daß die Gefahr besteht, daß Schmutz oder Keime in die Abschirmungskammer eingebracht werden. Damit lassen sich gewünschtenfalls Reinraumbedingungen der höchsten Güteklasse im Inneren der Einhausung 70b aufrechterhalten, ohne daß Wartungs- und Justagearbeiten am Laser erschwert sind. Besonders vorteilhaft ist es, wenn man den Laser nicht nur außerhalb der Einhausung 70b sondern sogar in einem Nachbarraum anordnet, beispielsweise einem Waschraum oder dergleichen, wohingegen die Ampullenfüll- und -verschließeinrichtung samt ihrer Einhausung in einem Raum mit gegenüber dem Nachbarraum höherer Luftgüte angeordnet ist.

Das Ausführungsfbeispiel der Fig. 3, das bis auf die Anordnung des Lasers 28c und die Größe der Einhausung 70c dem Ausführungsbeispiel der Fig. 2 entspricht, zeigt ansonsten aber eine platzsparende Anordnung des Lasers, nämlich eine Anordnung des Lasers mit vertikal angeordneter Laserachse. Dementsprechend ist ein als Strahlführungsmittel dienender Umlenkspiegel 80c vorgesehen, der den in vertikaler Richtung nach unten propagierenden Laserstrahl 30c um etwa 90° umlenkt.

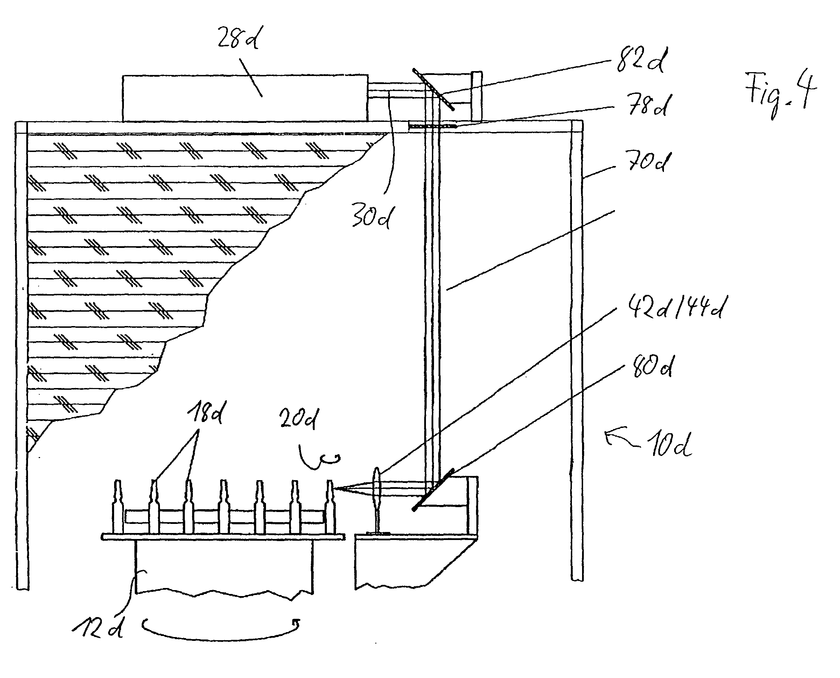

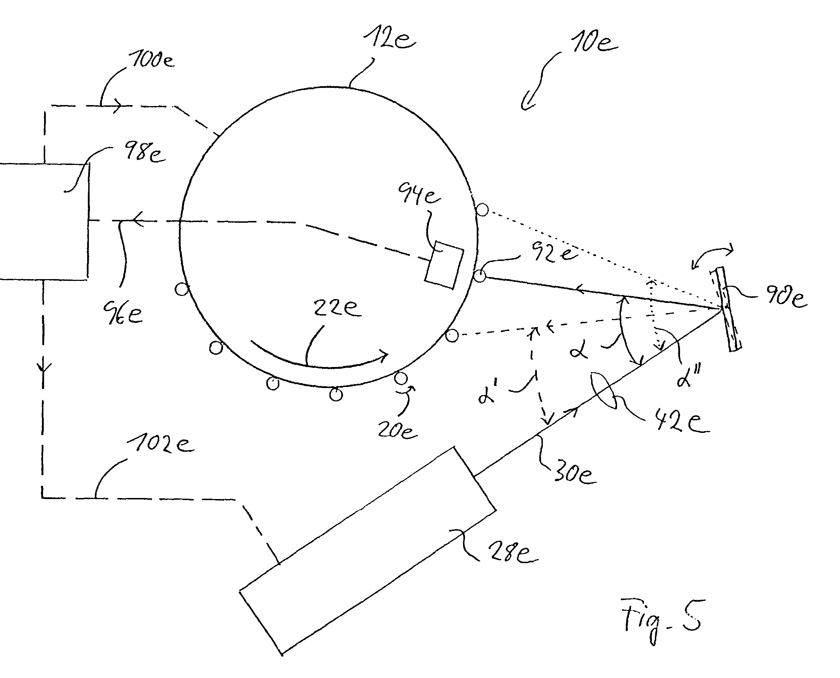

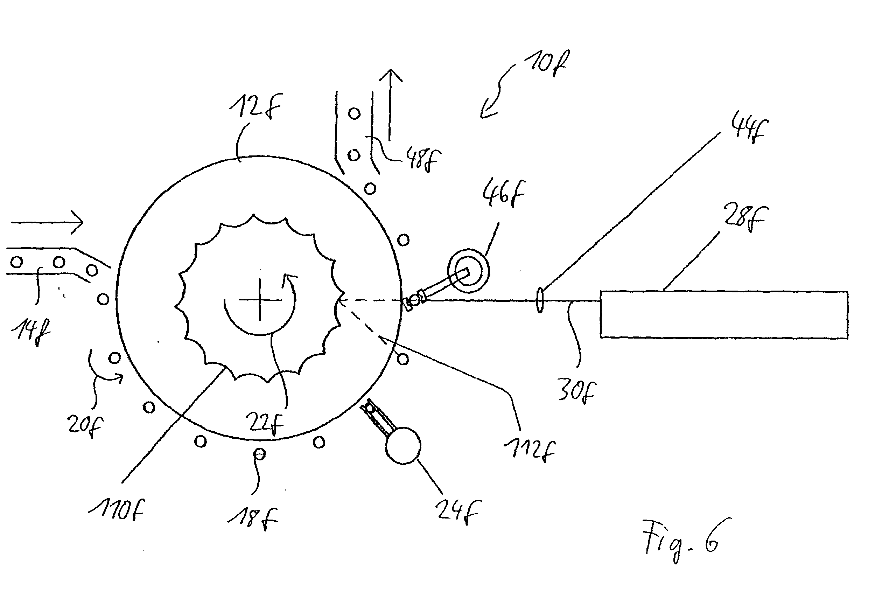

Eine weitere platzsparende Anordnung des Lasers ist in Fig. 4 veranschaulicht. Hier ist der Laser 28d auf einem Dach der Einhausung 70d angeordnet, und zwar außerhalb der Abschirmungskammer. Die Laserstrahlung 30d wird über einen ersten Umlenkspiegel 82d um etwa 90° nach unten umgelenkt, fällt dann durch ein Fenster 78d und wird dann durch einen zweiten Umlenkspiegel 80d um etwa 90° umgelenkt, um dann durch eine Strahlführungsanordnung 42d/44d auf die jeweils zu bearbeitende Ampulle 18d zu fallen.

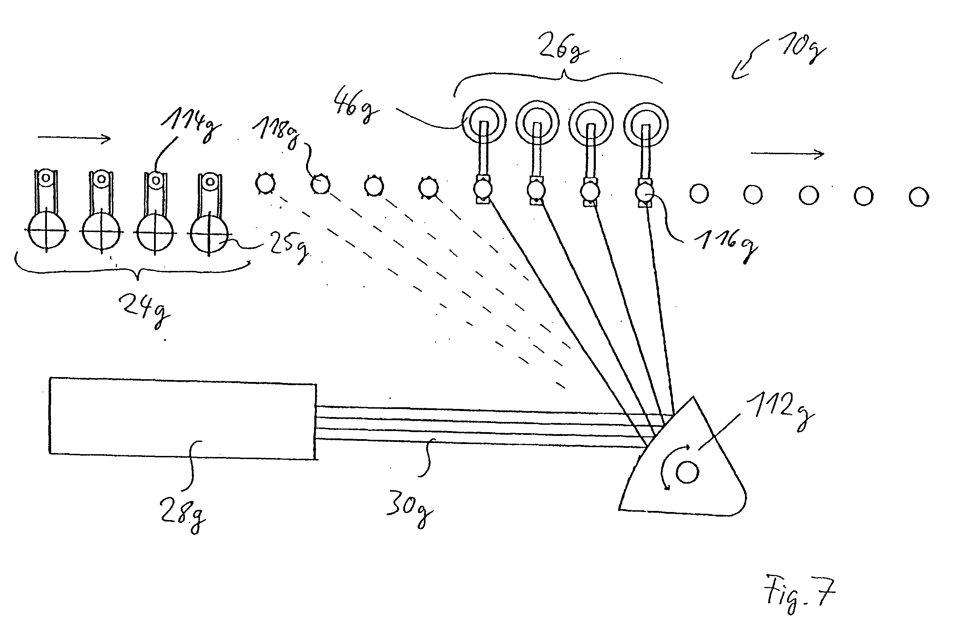

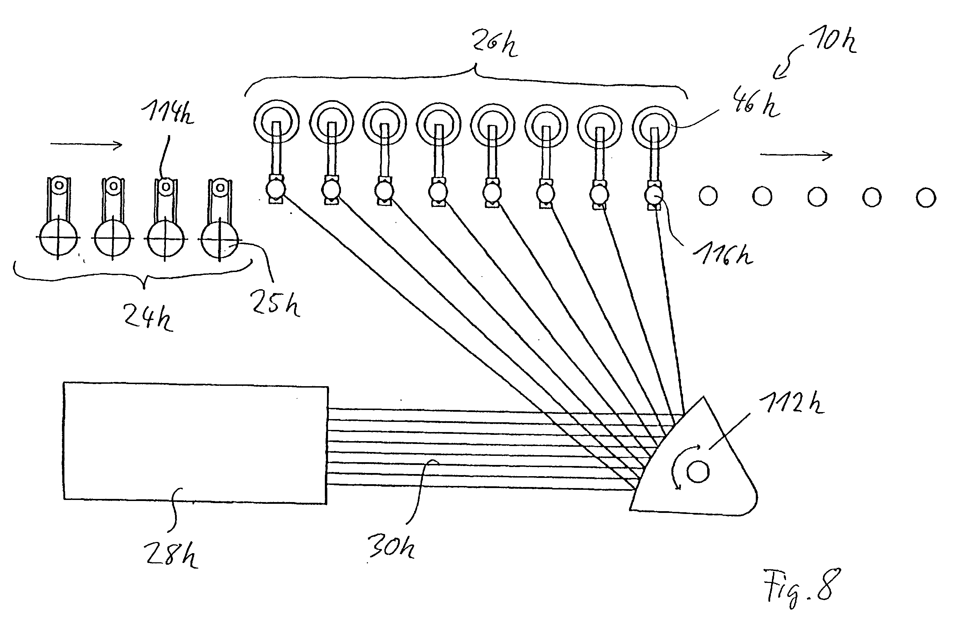

Ein weiteres Ausführungsbeispiel einer Ampullenfüll- und -verschließeinrichtung des Rundläufertyps ist in Fig. 5 veranschaulicht. Bei dieser Einrichtung (Füllstation, Öffnungsstation und ggf. vorgesehene Spießabzugsvorrichtung sind nicht eingezeichnet) ist ein Schwenkspiegel 90e als Strahlführungsmittel vorgesehen, der dazu dient, einen Umlenkwinkel für den Laserstrahl 30e zu variieren. Es bestehen mehrere Möglichkeiten:

Eine Variante wäre, daß der Rundläufer 12e ähnlich wie der Rundläufer der vorangehend beschriebenen Ausführungsbeispiele taktweise arbeitet, wobei der Laserstrahl 30e mittels des Schwenkspiegels 90e zwischen einer zum Vorerwärmen dienenden Strahlführung (Umlenkwinkel α') und einer zum eigentlichen Verschließen dienenden Strahlführung (Umlenkwinkel α) umgeschaltet wird. Diese Variante ist aber aufgrund von relativ hohen Totzeiten bei der Ampullenbearbeitung weniger bevorzugt.

Eine weitere Variante ist, daß der Rundläufer 12e zwar taktweise arbeitet, daß aber die Vorerwärmung während des Transports der Ampulle von einer ersten, einem stillstehenden Rotor 12e entsprechenden Förderposition und einer nachfolgenden zweiten, einem stillstehenden Rotor 12e entsprechenden Förderposition erfolgt mit entsprechender Nachführung des Laserstrahls durch entsprechendes Verschwenken des Schwenkspiegels 90e. Der Laserstrahl wird also beispielsweise kontinuierlich von einer dem Umlenkwinkel α' entsprechenden Strahlführung bis zum Erreichen einer dem Umlenkwinkel α entsprechenden Strahlführung gemäß der Förderbewegung der momentan bearbeiteten Ampulle nachgeführt. Hat die Ampulle die durch die Ampulle 92e in Fig. 5 symbolisierte Förderposition erreicht, bleibt der Rotor 12e stehen und die durch den Umlenkwinkel α gegebene Strahlführung bleibt erhalten, bis die Ampulle abgeschmolzen und verschlossen ist, ggf. unter Abziehen eines Ampullenspießes. Die hierzu ggf. vorgesehene Spießabzugseinrichtung kann stationär ausgebildet sein, da sie den jeweiligen Ampullenspieß bei stillstehender Ampulle abzieht.

Eine weitere Variante ist, daß der Rundläufer 12e kontinuierlich arbeitet, also ununterbrochen mit konstanter Geschwindigkeit umläuft. In einem solchen Fall erfolgt das Vorerwärmen und auch das eigentliche Verschließen durch Abschmelzen mittels der Laserstrahlung bei bewegter Ampulle. Alle auf die Ampulle einwirkenden Organe, also etwa Füllnadeln, Begasungsnadeln und Spießabzugsglieder (sofern ein Abziehen von Spießen vorgesehen ist) müssen dementsprechend dafür ausgebildet sein, bei bewegten Ampullen auf diese einzuwirken. Hinsichtlich der Einwirkung der Laserstrahlung auf die jeweils bearbeitete Ampulle könnte die Ausbildung der Einrichtung derart sein, daß von einem Umlenkwinkel α' bis zum Umlenkwinkel α eine Vorerwärmung der Ampulle erfolgt und daß vom Umlenkwinkel α bis zu einem Umlenkwinkel α" das eigentliche Verschließen erfolgt. Nach Erreichen des Umlenkwinkels α" schwenkt der Schwenkspiegel 90e wieder zurück, so daß wieder die durch den Umlenkwinkel α' gegebene Strahlführung erreicht ist. Die für ein exaktes Nachführen erforderliche Schwenkgeschwindigkeit des Umlenkspiegels 90e während der Nachführung ist nicht exakt konstant, sondern auf die nicht geradlinige Umlaufbewegung der Ampullen abgestimmt. Für größere Abstände des Umlenkspiegels 90e vom Rotor 12e kann aber auch eine konstante Schwenkgeschwindigkeit ausreichen, da diese eine hinreichend gute Näherung für die tatsächliche Umlaufbewegung der Ampullen darstellt.

Zu erwähnen ist noch, daß während der Vorerwärmung und dem eigentlichen Verschließen unterschiedliche Laserleistungen eingestellt werden können. Man kann während des Vorerwärmens und des eigentlichen Verschließens aber auch mit gleicher Laserleistung arbeiten.

Eine bevorzugte Weiterbildung der in Fig. 5 gezeigten Ausführungsform gemäß der bisherigen Beschreibung sieht vor, daß eine Detektoranordnung 94e vorgesehen ist, die von der Ampulle 92e am Ende der Vorerwärmung ausgehende Strahlung, insbesondere Wärmestrahlung, ggf. auch auf Relaxation von durch die Laserstrahlung angeregten Zuständen im Ampullenwandmaterial zurückgehende Emissionsstrahlung (man spricht auch von einem sogenannten "Prozeßleuchten") erfaßt und ein entsprechendes Erfassungssignal 96e einer zugeordneten Steuereinheit 98e zuführt. Die Steuereinheit 98e dient einerseits zum Steuern der Rundläufereinrichtung 12e mittels eines Steuersignals 100e und andererseits zum Steuern des Lasers 98e mittels eines Steuersignals 102e.

Aus dem Erfassungssignal 96e kann die Steuereinheit 98e einen momentanen Behandlungszustand der schon vorerwärmten Ampulle 92e, insbesondere deren Temperatur, bestimmen und hieraus berechnen, wieviel Energie der Ampulle noch während der Verschließungsphase mittels der Laserstrahlung 30e zuzuführen ist. Entsprechend diesem Berechnungsergebnis wird der Laser 28e für die Verschließungsphase hinsichtlich seiner Leistung eingestellt. Damit lassen sich auf einfache Weise wechselnde Ampullenformate oder Ampullen mit größeren Toleranzen hinsichtlich der Ampullengeometrie, Wandstärke und dergleichen bearbeiten, also füllen und verschließen, ohne daß die Ampullen zuvor sortiert werden müssen mit entsprechender Einstellung der Verfahrensparameter je nach Sortierung. Diese Verfahrensparameter können vielmehr auf Grundlage der Erfassung des Behandlungszustands durch den Detektor 94e automatisch eingestellt werden.

Soll Relaxations-Emissionsstrahlung erfaßt werden, so empfiehlt es sich, den Detektor in Abweichung von der Darstellung in der Figur auf der unter der Einwirkung des Laserlichtes stehenden Seite der Ampulle anzuordnen, damit dieses "Prozeßleuchten" ungedämpft in den Detektor treffen kann.

Zu erwähnen ist noch, daß anstelle eines stationären, nur den Behandlungszustand am Ende der Vorerwärmung erfassenden Detektors 94e auch ein sich mit der jeweils unter Einwirkung der Laserstrahlung stehenden Ampulle mitbewegender Detektor vorgesehen sein kann, der kontinuierlich den Behandlungszustand der Ampulle erfaßt und dementsprechend eine fortwährende Steuerung oder Regelung der Verfahrensparameter ermöglicht.

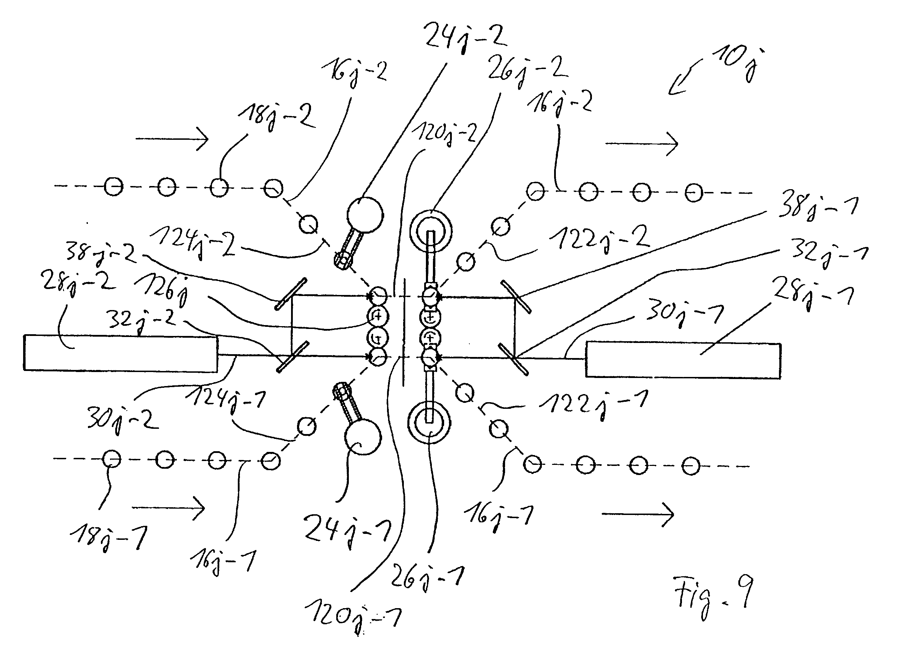

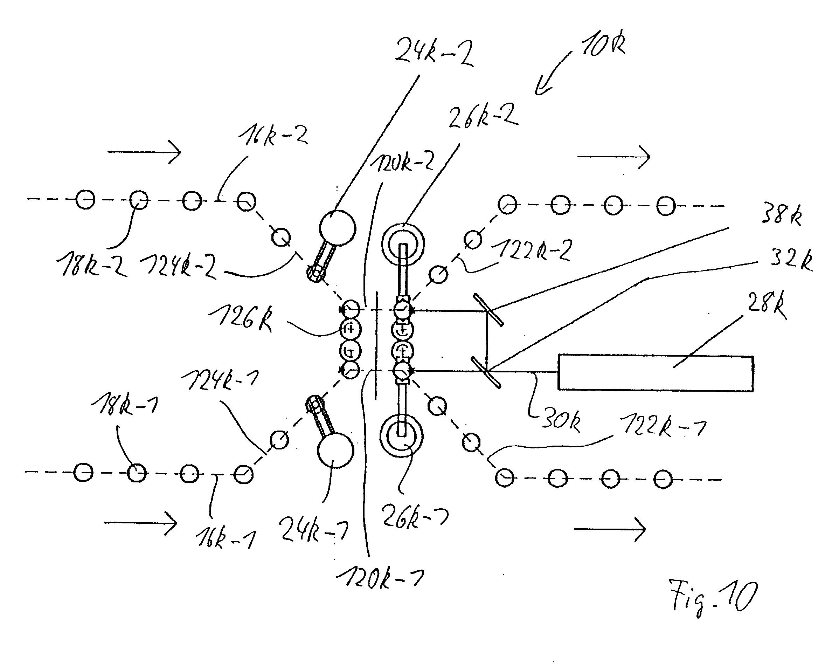

Ein weiteres Ausführungsbeispiel einer Ampullenfüll- und -verschließeinrichtung ist in Fig. 6 gezeigt. Es handelt sich wieder um eine Ampullenfüll- und -verschließeinrichtung 10f des Rundläufertyps, die hinsichtlich ihres grundsätzlichen Aufbaus dem Ausführungsbeispiel der Fig. 1 entspricht und im hier angenommenen Beispielsfall ebenfalls taktweise arbeitet. Ein wesentlicher Unterschied besteht aber darin, daß die Vorerwärmung während des Transports der Ampulle von einer Förderposition unmittelbar vor der der stationären Spießabzugseinrichtung 46f entsprechenden Förderposition zu dieser letzteren, der Spießabzugseinrichtung 46f entsprechenden Förderposition erfolgt. Die Laserstrahlung 30f des Lasers 28f ist derart gerichtet, daß sie durch die Strahlformungsmittel 44f (Linse 44f) auf diejenige Ampulle trifft, die sich momentan im Einflußbereich der Spießabzugseinrichtung 46f befindet. Diese momentan still stehende Ampulle wird durch die Laserstrahlung 30f abgeschmolzen, bis dann schließlich der Ampullenspieß durch die Abzugseinrichtung 46f abgezogen wird. Durch dieses Abziehen des Ampullenspießes wird für den Laserstrahl 30f der Weg frei, weiter in Laserstrahlrichtung zu propagieren, bis er auf ein Spiegelfacettenrad 110f fällt, das koaxial zum Rotor 12f an diesem befestigt ist und sich mit dem Rotor 12f mitdreht. Der Laserstrahl fällt dabei auf eine Spiegelfacette, die derart geformt ist, daß der Laserstrahl 30f in Richtung zur nächsten zu verschließenden Ampulle umgelenkt wird (gestrichelter Abschnitt 112f des Laserstrahls 30f). Dies gilt für jede Drehstellung des Rotors 12f während des Transports dieser Ampulle bis zum Erreichen der Spießabzugsförderstellung. Das Spiegelfacettenrad 110f (das je nach Ausbildung auch als Polygonspiegelanordnung bezeichnet werden kann) dient also zum kontinuierlichen Nachführen des Laserstrahls 30f mit seinem Strahlabschnitt 112f während der Vorerwärmung. Ist schließlich die Spießabzugsstelle erreicht, bleibt der Förderrotor 12f stehen und die Laserstrahlung 30f trifft direkt auf die Ampulle, um diese abzuschmelzen, bis schließlich der Spieß abgezogen wird und die Laserstrahlung wiederum auf die nachfolgende Ampulle trifft.

In Abwandlung von der vorangehenden Beschreibung ist es aber auch möglich, auch das Abschmelzen, also das eigentliche Verschließen, bei bewegter Ampulle durchzuführen, wozu der Förderrotor 12f kontinuierlich und vorzugsweise mit konstanter Drehgeschwindigkeit rotiert. Hierzu müßte im Falle eines Spießabziehens das Spießabzugsorgan sich entsprechend der Ampullenbewegung mit der Ampulle mitbewegen; gleiches gilt für sonstige Organe, wie Füllnadeln und Begasungsnadeln. Die Laserstrahlung 30f würde in diesem Fall nur in genau einer Momentanstellung der jeweils gerade bearbeiteten Ampulle direkt auf diese fallen und ansonsten über das Spiegelfacettenrad 110f in Richtung zur Ampulle umgelenkt werden.

Zu erwähnen ist noch, daß die Facetten des Spiegelfacettenrads 11 0f eine spezielle, im einzelnen zu berechnende Form aufweisen müssen, um das beschriebene Umlenken zu erreichen. Die Darstellung in Fig. 6 ist insoweit vereinfacht.

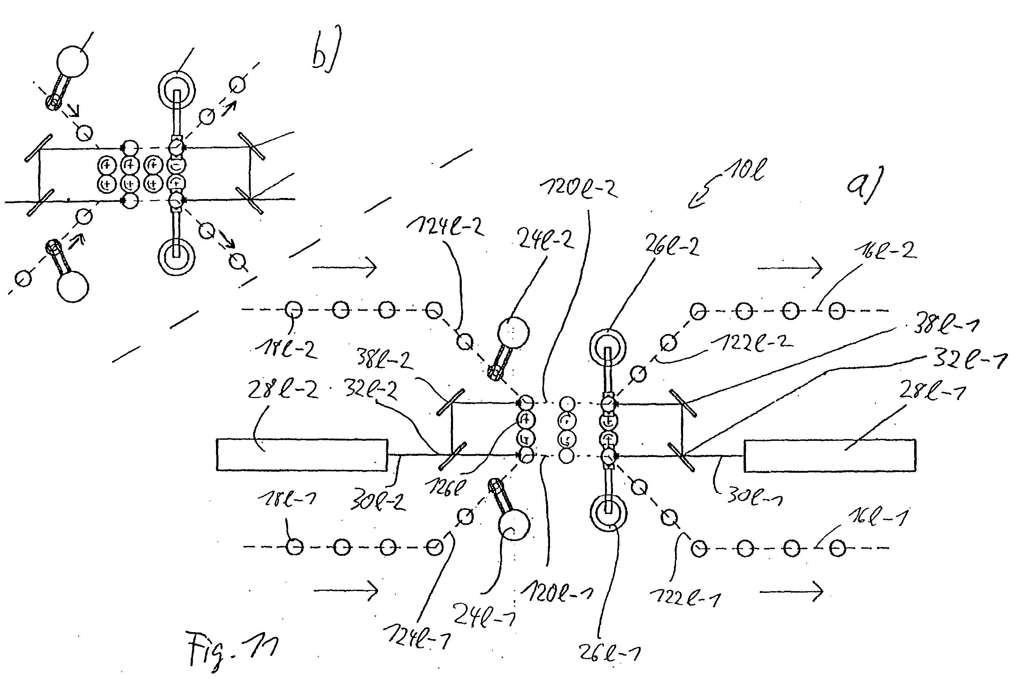

Fig. 7 zeigt ein Ausführungsbeispiel einer Ampullenfüll- und -verschließeinrichtung 10g mit einer linearen Ampullen-Förderstrecke. Die Einrichtung ist dafür ausgebildet, simultan vier Ampullen zu behandeln, d.h. vier Ampullen zu füllen, vier Ampullen vorzuerwärmen und vier Ampullen unter Abziehen eines Ampullenspießes zu verschließen. Hierzu ist eine Laseranordnung 28g vorgesehen, die vier Laserstrahlen 30g abgibt. Die Laseranordnung 28g kann von einem Laser mit nachfolgender Strahlteileranordnung gebildet sein oder von vier gesonderten Lasern. Ferner ist eine Füllstation 24g mit vier Füllköpfen 25g vorgesehen sowie eine Verschließstation 26g mit vier Spießabzugsgliedern 46g. Es kann sich um eine in bezug auf die Ampullenförderung kontinuierlich oder taktweise arbeitende Einrichtung handeln. Es wird im folgenden von einem kontinuierlichen Betrieb ausgegangen. Die vier Laserstrahlen 30g werden durch ein schwenkbares Facettenspiegelelement (oder - alternativ - ein Rotationsspiegelelement, etwa ein Spiegelrad) in Richtung zu den momentan vorzuerwärmenden bzw. abzuschmelzenden Ampullen umgelenkt. Das Facettenspiegelelement schwenkt hierbei kontinuierlich im Uhrzeigersinn entsprechend der Vorwärtsbewegung der Ampullen, bis es nach Abziehen der Ampullenspieße in entgegengesetzter Richtung mit möglichst großer Schwenkgeschwindigkeit zurückschwenkt, um die nächsten Ampullen mit Laserstrahlung zu bestrahlen. (Im Falle eines Rotationsspiegelelements könnte sich dieses alternativ weiter in die gleiche Richtung drehen.) Diese Ampullen werden während ihrer Vorwärtsbewegung entlang der Förderstrecke zuerst vorerwärmt und dann schließlich abgeschmolzen, bis die Spießabzugsorgane zum Einsatz kommen. Spießabzugsorgane und Füllköpfe müssen sich entsprechend der Vorwärtsbewegung der Ampullen mit diesen mitbewegen. Es ist aber auch ohne weiteres ein taktweiser Betrieb möglich mit stationären Füllköpfen und stationären Spießabzugsorganen, wobei vorzugsweise aber die Vorerwärmung während des Transports derAmpullen zu den Spießabzugsorgänen erfolgt.

Das in Fig. 7 veranschaulichte Prinzip des Nachführens bzw. Umlenkens mehrerer Laserstrahlen zur gleichzeitigen Bearbeitung (Vorerwärmung oder/und Abschmelzen) von Ampullen läßt sich auch bei anderen Geometrien und Verläufen der Ampullenförderstrecke (beispielsweise bei einem kreisbogenförmigen Verlauf) realisieren. Ist ein schwenkbares oder drehbares Facettenspiegelelement vorgesehen, so muß die Schwenk/Drehbewegung und die Geometrie der Spiegelfacetten auf die Fördergeschwindigkeit und den Verlauf der Förderstrecke abgestimmt werden. Die Geometrie der Spiegelfacetten oder allgemein die Ausbildung einer Spiegelanordnung kann entsprechend der Aufgaben des Facettenspiegelelements bzw. der Spiegelanordnung berechnet werden und wird in der Regel von der in Fig. 7 gezeigten vereinfachten Darstellung abweichen.

Es ist im übrigen zu betonen, daß eine Vorerwärmung von zu verschließenden Ampullen nicht zwingend erforderlich ist, sondern nur für ein Verschließen mit geringen Lasereinwirkungszeiten sehr vorteilhaft ist. Bei der Beschreibung von Fig. 7 wurde zwar davon ausgegangen, daß eine Vorerwärmung vorgesehen ist (die sich für eine andere Schwenkstellung des Facettenspiegelelements 112g ergebende Strahlführung zum Vorerwärmen von Ampullen ist gestrichelt angedeutet), eine derartige Vorerwärmung ist aber - wie gesagt - nicht zwingend. Man kann das Abschmelzen der Ampullen auch derart ausführen, daß das Erwärmen der Ampulle derart erfolgt, daß die in der Ampulle enthaltene Luft bzw. das in der Ampulle enthaltene Gas (insbesondere Schutzgas) erwärmt wird und entsprechend expandiert, bevor es zum Zusammenlaufen von Ampullenwandmaterial und ggf. zum Spießabziehen kommt. Man wird also die Leistung der Laserstrahlen entsprechend auf die Ampullengeometrie und Wandstärke abstimmen, so daß die Erhitzung der Ampulle nicht zu schnell erfolgt. Bei einer derartigen Konstellation mit kontinuierlicher Laserstrahlungseinwirkung ist es willkürlich, wenn man eine bestimmte Phase der Lasereinwirkung als Vorerwärmungsphase und eine weitere Lasereinwirkungsphase als Verschließphase bezeichnet. Als Vorerwärmungsphase kann aber jedenfalls derjenige Teil der Laserstrahleinwirkungsphase bezeichnet werden, bei dem noch kein Ampullenwandmaterial erschmolzen wird. Diese "Vorerwärmungsphase" muß ausreichend lange dauern, damit das in der Ampulle enthaltene Gas erwärmt wird und entsprechend seiner temperaturbedingten Expansion aus der Ampulle entweichen kann, bevor es zu einem wesentlichen Zusammenlaufen/ Zusammenfallen von Ampullenwandmaterial kommt und jedenfalls bevor -sofern vorgesehen - der jeweilige Ampullenspieß abgezogen wird.

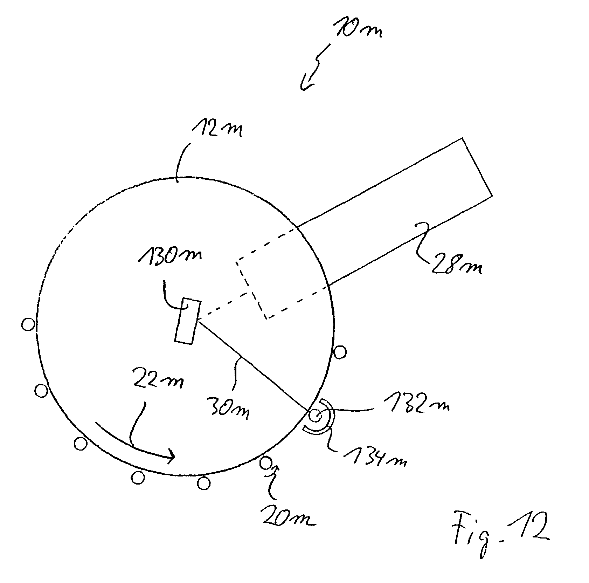

Fig. 8 zeigt eine Variante des Ausführungsbeispiels der Fig. 7 für höhere Füll- und Verschließleistung (Zahl der pro Zeiteinheit gefüllten und verschlossenen Ampullen). Die Laseranordnung 28h erzeugt acht parallele Laserstrahlen 30h und die Füllstation 24h ist mit acht Füllköpfen 25h ausgeführt, von denen nur vier gezeigt sind. Die Verschließstation 26h ist mit acht Spießabzugsgliedern 46h ausgeführt. Sofern man die Einrichtung 10h derart betreibt, daß überhaupt eine gesonderte Vorerwärmungsphase identifizierbar ist, so erfolgt diese in einem Zuge mit dem Abschmelzen und nachfolgenden Spießabziehen. Dementsprechend sind im Gegensatz zum Ausführungsbeispiel der Fig. 7 keine Ampullen zwischen den im Einflußbereich der Füllstation 24h und im Einflußbereich der Spießabzugsanordnung 26h stehenden Ampullen angeordnet, sondern auf die im Einflußbereich der Füllstation 24h stehenden Ampullen 114h folgen in Förderrichtung unmittelbar die im Einflußbereich der Spießabzugsanordnung 26h stehenden Ampullen 116h. Im Gegensatz dazu sind beim Ausführungsbeispiel der Fig. 7 zwischen den im Einflußbereich der Füllstation 24g stehenden Ampullen 114g und den im Einflußbereich der Spießabzugsanordnung 26g stehenden Ampullen 116g vier Ampullen 118g angeordnet, die gemäß der bevorzugten Ausführungsvariante zuerst noch vorerwärmt werden müssen, bevor sie in den Einflußbereich der Spießabzugsanordnung 26g gelangen. Ebenso wie im Falle der Einrichtung 10g der Fig. 7 kann die Einrichtung 10h in bezug auf die Ampullenförderung taktweise oder kontinuierlich arbeiten. Auch ist es für beide Ausführungsbeispiele möglich, daß in Abweichung von der Darstellung die Förderstrecke nicht linear, sondern gekrümmt ist, beispielsweise einem Kreisbogen folgt.

Ein sehr vorteilhaftes Ausführungsbeispiel einer Ampullenfüll- und -verschließeinrichtung 10j ist in Fig. 9 gezeigt. Die Einrichtung 10j weist zwei gesonderte Ampullenförderstrecken 16j-1 und 16j-2 auf, jeweils mit einer Füllstation 24j-1 bzw. 24j-2 und einer Verschließstation 26j-1 und 26j-2 (diese jeweils mit einem Spießabzugsglied, vorzugsweise in der Form einer Spießabzugszange).

Die Ampullen 18j-1 bzw. 18j-2 transportierenden Ampullenförderstrecken 16j-1 und 16j-2 sind von linearen Förderstreckenabschnitten gebildet und sind für eine taktweise Förderung der Ampullen ausgelegt (die Füllorgane, Spießabzugsorgane und sonstigen Ampullenbehandlungsorgane sind also dafür ausgelegt, stillstehende Ampullen zu behandeln).

Wesentliche Vorteile ergeben sich daraus, daß ein Förderstreckenabschnitt 120j-1 bzw. 120j-2, der sich zwischen der auf die Befüllungsförderposition folgende Förderposition und der Spießabzugsförderposition erstreckt, parallel und entlang einer Laserstrahlungsstrecke verläuft, wobei die Ampulle bzw. die Ampullen, die in diesem Förderstreckenabschnitt angeordnet sind bzw. sich entlang dieses Förderstreckenabschnitts bewegen, unter der Einwirkung von Laserstrahlung stehen. Wie Fig. 9 erkennen läßt, werden die Ampullen 18j-1 bzw. 18j-2 nach Befüllung zuerst in 'den Förderstreckenabschnitt 120j-1 bzw. 120j-2 und damit in die sich längs der Laserstrahlungsstrecke propagierende Laserstrahlung hinein bewegt und nach Abziehen des jeweiligen Ampullenspießes führt die Fördereinrichtung die Ampullen wieder aus dem Einwirkungsbereich der Laserstrahlung heraus, wenn die jeweilige Ampulle den Förderstreckenabschnitt 120j-1 bzw. 120j-2 verläßt und in den nachfolgenden Förderstreckenabschnitt 122j-1 bzw. 122j-2 eintritt. Ein Umschalten der Laserstrahlung zwischen verschiedenen Laserstrahlungsstrecken bzw. ein Nachführen oder Verschwenken von Laserstrahlung ist bei dieser Ausbildung der Einrichtung nicht erforderlich, da sich die Ampullen während ihrer Bewegung entlang des Förderstreckenabschnitts 120j-1 bzw. 120j-2 zwangsläufig stets unter Einwirkung der Laserstrahlung befinden. Dieses Merkmal der in Fig. 9 gezeigten Einrichtung ist insbesondere auch für einen kontinuierlichen Förderbetrieb ohne Fördertakt vorteilhaft, da dann ein Nachführen der Laserstrahlung entsprechend der Bewegung der Ampullen entfällt. Eine nicht gesondert dargestellte Variante des Ausführungsbeispiels der Fig. 9 zeichnet sich deshalb durch kontinuierlichen Förderbetrieb aus, wobei hierzu die Ampullenbehandlungsorgane derart ausgeführt sein müssen, daß sie sich mit den Ampullen mitbewegen. Beispielsweise könnten sich die Spießabzugsorgane längs des auf den zentralen Förderstreckenabschnitt 120j-1 bzw. 120j-2 folgenden Förderstreckenabschnitts 122j-1 bzw. 122j-2 oder entlang des zentralen Förderstreckenabschnitts 120j-1 bzw. 120j-2 mit den Ampullen mitbewegen, wohingegen sich die Füllorgane entlang des dem Förderstreckenabschnitt 120j-1 bzw. 120j-2 vorausgehenden Förderstreckenabschnitt 124j-1 bzw. 124j-2 mit den Ampullen mitbewegen könnten. Zu erwähnen ist auch noch, daß der Verlauf der Förderstrecken, insbesondere die die plötzliche Richtungsänderungen der geförderten Ampullen bedingende "eckige" Ausbildung der Förderstrecken, rein exemplarischen Charakter hat; man kann ohne weiteres auch stetig in die gradlinigen Abschnitte 120j-1 und 120j-2 übergehende, gekrümmte Zufuhr- und Abfuhr-Förderstreckenabschnitte vorsehen.

Zur Fig. 9 ist ferner noch zu ergänzen, daß eine Reibradanordnung 126j vorgesehen ist, um die Ampullen während der Wechselwirkung mit der Laserstrahlung kontinuierlich um ihre jeweilige Längsachse rotieren zu lassen. Die Laserstrahlung wird durch zwei Laser 28j-1 und 28j-2 erzeugt, deren Laserstrahlen 30j-1 bzw. 30j-2 mittels eines Strahlteilers 32j-1 bzw. 32j-2 aufgeteilt wird, so daß nach Umlenken eines der jeweiligen Teilstrahlen mittels eines Umlenkspiegels 38j-1 bzw. 38j-2 jeweils zwei zueinander parallele Strahlen entstehen, von denen jeweils einer mit den Ampullen im Förderstreckenabschnitt 120j-1 und der andere mit den Ampullen im Förderstreckenabschnitt 120j-2 wechselwirkt. Durch eine geringfügige winkelmäßige Fehlausrichtung zwischen den vom Laser 28j-1 stammenden Teilstrahlen und vom Laser 28j-2 stammenden Teilstrahlen wird verhindert, daß die von dem einen Laser ausgehende Laserstrahlung in den anderen Laser eintritt und so den Betrieb des Lasers stört.

Bei der in Fig. 9 dargestellten Stellung der Ampullen dient die vom Laser 28j-2 ausgehende Laserstrahlung zur Vorerwärmung der Ampullen, die in der Darstellung der Figur am linken Ende der Förderstreckenabschnitte 120j-1 und 120j-2 angeordnet sind und die vom Laser 28j-1 stammenden Teilstrahlen dienen zum Verschließen der am rechten Ende dieser Förderstreckenabschnitte im Bereich der Spießabzugsorgane angeordneten Ampullen durch Abschmelzen der Ampullen mit nachfolgendem Spießabziehen. Während der Förderung der am linken Ende der Förderstreckenabschnitte angeordneten Ampullen über diesen Förderstreckenabschnitt zum rechten Ende hin ist aber nur genau diese eine Ampulle im genannten Förderstreckenabschnitt angeordnet, so daß diese Ampulle von beiden Seiten mit Laserstrahlung bestrahlt wird, nämlich einerseits mit einem Teilstrahl des Lasers 28j-1 und andererseits mit Laserstrahlung vom Laser 28j-2. Hieraus resultiert eine entsprechend erhöhte Energiezufuhr auf die Ampullen während des Transports entlang des Förderstreckenabschnitts 120j-1 bzw. 120j-2.

Nachzutragen ist noch, daß die Strahlteiler 32j-1 und 32j-2 vorzugsweise ein Teilungsverhältnis von 50 % : 50 % aufweisen, damit für die Förderstreckenabschnitte 120j-1 und 120j-2 gleiche Bedingungen herrschen. Die von den Lasern 28j-1 und 28j-2 abgegebene Strahlungsleistung kann aber zwischen den beiden Lasern differieren. Beispielsweise kann im Falle eines taktweisen Förderns der Laser 28j-2 deutlich geringere Leistung als der Laser 28j-1 abgeben, wenn während der Vorerwärmung gegenüber dem eigentlichen Abschmelzen den Ampullen weniger Energie zugeführt werden soll.

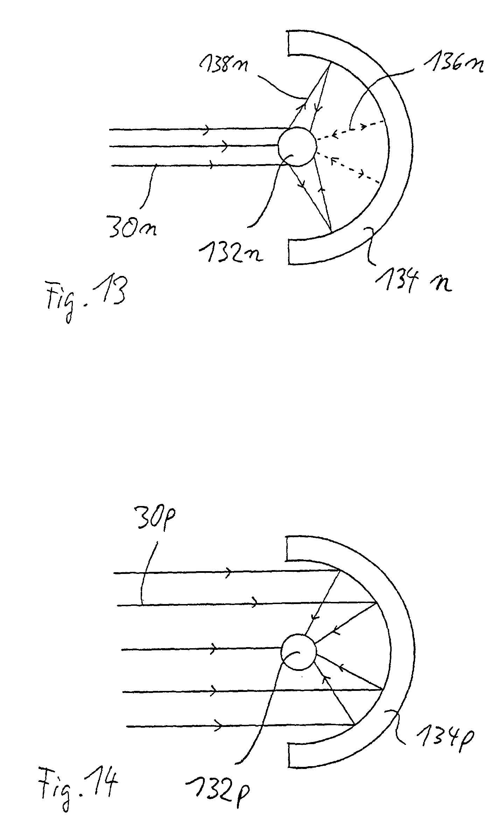

Das Ausführungsbeispiel der Fig. 10 unterscheidet sich vom Ausführungsbeispiel der Fig. 9 nur dadurch, daß die Ampullenfüll- und -verschließeinrichtung 10k der Fig. 10 nur mit einem Laser 28k ausgerüstet ist. Dieser Laser dient sowohl zur Vorerwärmung als auch zum eigentlichen Abschmelzen der Ampullen, wobei nach Abziehen des Ampullenspießes der am rechten Ende des Förderstreckenabschnitts 120k-1 bzw. 120k-2 angeordneten Ampulle die Laserstrahlung zur nachfolgenden, am linken Ende dieses Förderstreckenabschnitts angeordneten Ampulle durchgelassen wird und diese zum Vorerwärmen bestrahlt.

Das Ausführungsbeispiel der Fig. 11a unterscheidet sich vom Ausführungsbeispiel der Fig. 9 dadurch, daß die Länge der Förderstreckenabschnitte 1201-1 und 1201-2 verdoppelt ist, so daß sich stets wenigstens zwei und maximal drei (in Fig. 11 gezeigte Situation) Ampullen im jeweiligen Förderstreckenabschnitt 1201-1 bzw. 1201-2 befinden, der entlang einer Laserstrahlungsstrecke verläuft. Bei der in Fig. 11 gezeigten Situation werden die am linken Ende dieser Förderstreckenabschnitte angeordneten Ampullen durch Laserstrahlung vom Laser 281-1 bestrahlt, um die Ampullen vorzuwärmen. Die am rechten Ende der Förderstreckenabschnitte angeordneten Ampullen werden mit Laserstrahlung vom Laser 281-2 bestrahlt, um die Ampullen durch Abschmelzen und nachfolgendes Spießabziehen zu verschließen. Die in der Mitte des jeweiligen Förderstreckenabschnitts angeordneten Ampullen stehen momentan nicht unter Einwirkung von Laserstrahlung. Dies ist insofern vorteilhaft, als die Vorerwärmung ja dazu dient, daß die in der Ampulle enthaltene Luft bzw. das in der Ampulle enthaltene Gas zu erwärmen und ihm Zeit zu geben, entsprechend der temperaturbedingten Expansion aus der Ampulle auszutreten. Da das Abschmelzen nicht unmittelbar auf die Vorerwärmung folgt, ist ausreichend Zeit vorgesehen, daß ein Temperaturausgleich zwischen vorerwärmtem Wandmaterial und in der Ampulle enthaltenem Gas stattfinden kann und das expandierende Gas aus der Ampulle austreten kann, bevor die Ampulle verschlossen wird.

Bei der in Fig. 11a gezeigten Auslegung der Einrichtung 101 werden die Ampullen stets nur von einer Seite mit Laserstrahlung bestrahlt, nämlich von links zur Vorerwärmung und von rechts zum Abschmelzen.

Fig. 11b zeigt eine Modifikation des Ausführungsbeispiels der Fig. 11a. Gemäß der Modifikation sind wiederum - ähnlich wie im Fall der Fig. 9 - stets eine oder zwei Ampullen im zentralen, zur Laserstrahlungsstrecke parallelen Förderstreckenabschnitt angeordnet, wobei das Zeitintervall, währenddem eine Ampulle von zwei Seiten bestrahlt wird, minimiert ist. Gegenüber dem Beispiel der Fig. 11a ist eine Totzeit, während der eine im zentralen Förderstreckenabschnitt angeordnete Ampulle keine Laserstrahlung empfängt, vermieden, was den Vorteil hat, daß ein Ableiten/Abstrahlen von Wärmeenergie von dem vorerwärmten Abschnitt der Ampulle während einer solchen Totzeit nicht auftreten kann, so daß für das Abschmelzen weniger Energie zugeführt werden muß bzw. weniger Laserleistung für die Vorerwärmung ausreicht.

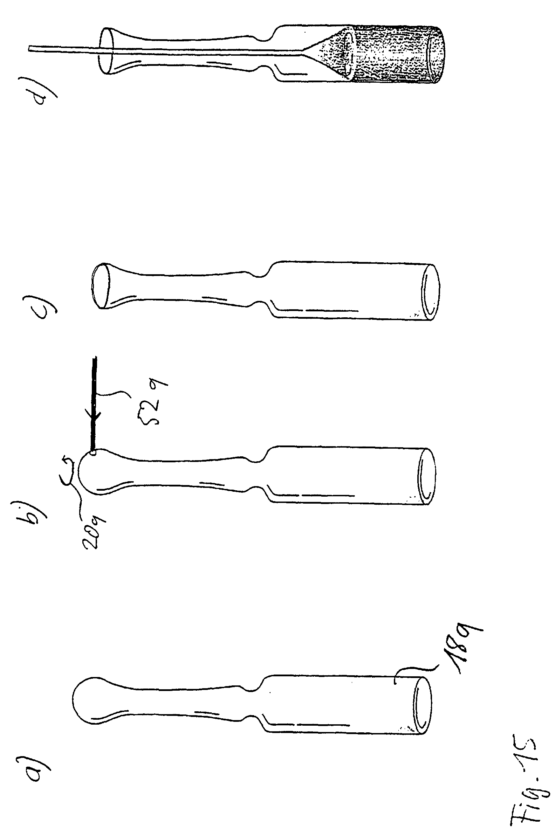

Ein weiteres Ausführungsbeispiel einer Ampullenfüll- und -verschließeinrichtung 10m des Rundläufertyps ist in Fig. 12 gezeigt. Hier wird eine relativ kompakte Anordnung dadurch erreicht, daß die Laserstrahlung des Lasers 28m vom Inneren des Rotors 12m her zugeführt wird. Eine entsprechende Strahlführungsanordnung ist bei 130m angedeutet. Das in Fig. 12 veranschaulichte Konstruktionsprinzip kann sowohl für taktweise arbeitende Maschinen als auch für kontinuierlich arbeitende Maschinen (taktweise und kontinuierlich im Hinblick auf die Förderung der Ampullen) angewendet werden. Insbesondere kann mit einer in den Rotor integrierten Laserstrahlführung sowohl ein Nachführen von Laserstrahlung entsprechend einer Ampullenbewegung als auch eine stationäre Laserstrahlführung auf vergleichsweise einfache Art und Weise realisiert werden.

Das Ausführungsbeispiel der Fig. 12 zeichnet sich noch dadurch aus, daß der momentan unter Einwirkung von Laserstrahlung stehenden Ampulle 132m eine Strahlungsreflexionsanordnung 134m zugeordnet ist, die von der Ampulle 132m ausgehende Strahlung, insbesondere reflektierte Laserstrahlung und Wärmestrahlung, zur Ampulle zurückreflektiert. Es wird hierzu auf Fig. 13 verwiesen, die einen Reflexionsspiegel 134n zeigt, der in bezug auf eine Ampulle 132n derart positioniert und ausgebildet ist, daß von der Ampulle 132n abgestrahlte Wärmestrahlung 136n zur Ampulle zurückreflektiert wird. Ferner wird von der Ampulle 132n reflektierte Laserstrahlung 138n zur Ampulle 132n zurückreflektiert. Durch diese Rückreflexion von Laserstrahlung und Wärmestrahlung zur Ampulle wird die Energie der Laserstrahlung in hohem Maße zum Vorerwärmen oder/und Abschmelzen der jeweiligen Ampulle ausgenutzt, so daßentsprechend kurze Einwirkungszeiten für die Laserstrahlung möglich sind.

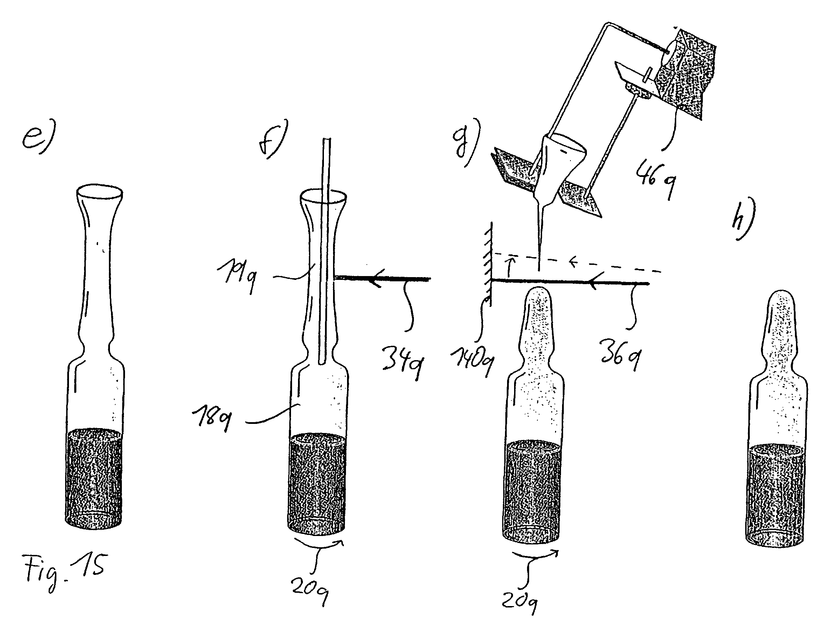

Fig. 14 zeigt eine Variante, wie eine Strahlungsreflexionsanordnung ähnlich der Anordnung 134m bzw. 134n ausgenutzt werden kann, um eine Ampulle 132p von mehreren Seiten zu bestrahlen, so daß ein Rotierenlassen der Ampulle entbehrlich wird. Hierzu wird der Laserstrahl 30p derart aufgeweitet, daß ein wesentlicher Teil des Laserstrahls an der Ampulle 132p vorbei geht. Dieser an der Ampulle vorbeigehende Teil der Laserstrahlung trifft auf die Strahlungsreflexionsanordnung 134p und wird von dieser in Richtung zur Ampulle 132p umgelenkt, so daß diese von allen Seiten mit Laserstrahlung bestrahlt wird. Gleichzeitig kann die Reflexionsanordnung ähnlich wie im Falle der Fig. 13 von der Ampulle ausgehende Strahlung zu dieser zurückreflektieren.

Es ist darauf hinzuweisen, daß in der Darstellung der Figuren 13 und 14 nur aus Vereinfachungsgründen jeweils eine sphärische Gestalt der Reflexionsfläche des Spiegels 134n bzw. 134p gewählt wurde. Zur Optimierung der Eigenschaften des Spiegels 134n bzw. 134p kann der Spiegel auch mit einer asphärischen Reflexionsfläche ausgebildet werden. Eine Optimierung der Reflexionsoberfläche im Hinblick auf die vom Spiegel zu erfüllenden Aufgaben ist für den Fachmann kein Problem.

Fig. 15 veranschaulicht ein Bearbeitungsprogramm zum Öffnen, Füllen, Vorerwärmen und Verschließen einer Ampulle. Fig. 15a zeigt eine Ampulle im geschlossenen Zustand, wie sie vom Hersteller hergestellt wird. Fig. 15b zeigt, wie die Ampulle unter Einsatz von Laserstrahlung 52q unter Rotation der Ampulle um ihre Längsachse geöffnet wird. Die Laserstrahlung 52q wird dazu eingesetzt, eine obere Ampullenkuppe zu entfernen, so daß schließlich eine Ampulle mit Ampulleneinfüllöffnung bereitgestellt wird, wie in Fig. 15c dargestellt ist. Setzt man Ampullen ein, die von vornherein eine Ampulleneinfüllöffnung aufweisen, stellt die Ampulle der Fig. 15c den Ausgangspunkt für das Behandlungsprogramm dar.

Fig. 15d veranschaulicht das Befüllen der Ampulle unter Verwendung einer Befüllungsnadel. Während der Befüllung kann auch Schutzgas in die Ampulle eingeführt werden, beispielsweise mittels einer gesonderten Begasungsnadel oder mit einer einen Befüllungskanal und einen Begasungskanal aufweisenden Behandlungsnadel.

Gemäß Fig. 15e ist die Ampulle fertig gefüllt und muß nun verschlossen werden. Hierzu wird die Ampulle gemäß 15f zuerst in einem mittleren Höhenbereich ihres Ampullenspießes 1 9q mit Laserstrahlung 34q bestrahlt, wobei sich die Ampulle um ihre Längsachse dreht. Gewünschtenfalls kann die Ampulle hierbei weiter begast werden; eine entsprechende Begasungsnadel, die beispielsweise verspiegelt sein kann, ist in Fig. 15f gezeigt. Diese Begasungsnadel taucht durch den gesamten Ampullenspieß 19q bis zum oberen Ende des zylindrischen Aufnahmeraums der Ampulle in die Ampulle ein. Da während der Vorerwärmung die Begasung auf diese äußerst wirkungsvolle Art und Weise fortgesetzt werden kann, kann auf eine herkömmlich häufig erforderliche Schlußbegasung unmittelbar vor dem Verschließen der Ampulle verzichtet werden. Man kann aber auch noch eine Schlußbegasung vorsehen, wobei die Schlußbegasung in einer Anfangsphase des Verschließens sogar noch mittels einer durch den Ampullenspieß in die Ampulle eingetauchten Nadel erfolgen kann. Diese Nadel muß nur rechtzeitig herausgezogen werden, bevor es zum Zusammenlaufen/Zusammenfallen von erschmolzenem Ampullenwandmaterial kommt und insbesondere bevor der Ampullenspieß abgezogen wird, sofern ein Spießabziehen überhaupt vorgesehen ist.

Fig. 15g zeigt das Abziehen des Ampullenspießes mittels einer Spießabzugszange, nachdem zuvor die Ampulle mittels des Laserstrahls 36q abgeschmolzen wurde. Da nach Abziehen des Ampullenspießes der Laserstrahl 36q nicht mehr von der Ampulle abgefangen wird, ist eine Strahlfalle 140q angedeutet, auf den die Laserstrahlung 36q nach Abziehen des Ampullenspießes trifft. Zur Förderung eines Ablösens des Ampullenspießes von der eigentlichen Ampulle, insbesondere zum Unterbrechen eines sich evtl. bildenden Materialfadens (Glasfadens) zwischen Ampulle und abgezogenem Spieß kann der Laserstrahl 36q nach oben verschwenkt werden, um diesen Faden gezielt zu zerschmelzen. Fig. 15h zeigt dann die fertig verschlossene Ampulle.

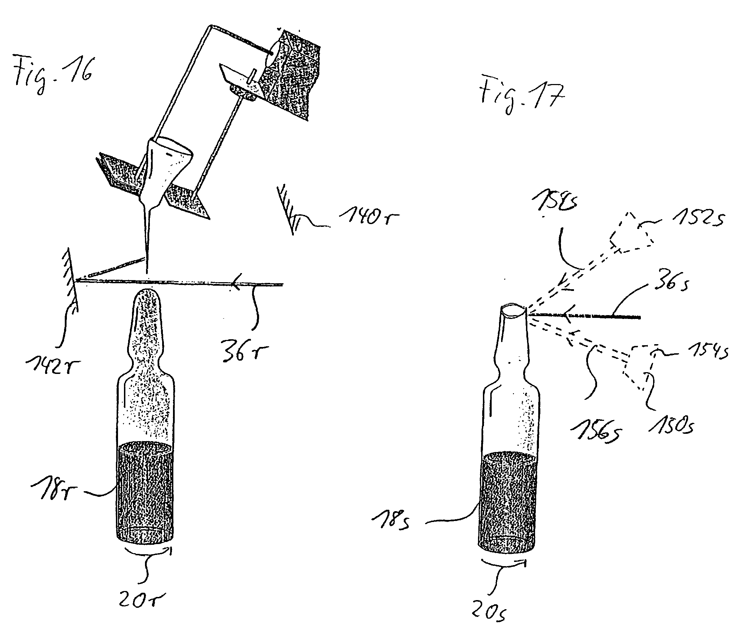

Bei Fig. 15g wurde der Laserstrahl gemäß der gestrichelt angedeuteten Variante nach oben verschwenkt, beispielsweise durch einen entsprechenden Schwenkspiegel. Es ist aber auch eine passive Strahlführung möglich, die zum gleichen Ziel führt. Dies ist in Fig. 16 gezeigt. Hier ist hinter der Ampulle 18r ein Spiegel 142r vorgesehen, der nach Abziehen des Ampullenspießes den Laserstrahl 36r nach oben hin umlenkt, so daß er auf den Faden zwischen abgezogenem Ampullenspieß und der eigentlichen Ampulle trifft und so das Unterbrechen dieses Fadens fördert. Wiederum ist eine Strahlfalle 140r angedeutet, die zuverlässig verhindert, daß der Laserstrahl Schaden anrichtet.

Eine weitere Variante ist in Fig. 17 angedeutet. Bei der in Fig. 17 gezeigten Ampulle handelt es sich um eine Ampulle, die ohne Spießabziehen zu verschließen ist. Das Öffnen (sofern geschlossene Ampullen verwendet werden), das Füllen und das Vorerwärmen (ggf. unter Ampullenbegasung) kann bei einer derartigen Ampulle analog zu der in den Figuren 15a bis 15f veranschaulichten Vorgehensweise erfolgen. Zum Verschließen wird die Ampulle nun in ihrem oberen, an die Einführöffnung angrenzenden Bereich mit einem Laserstrahl 36s bestrahlt, bis das Ampullenwandmaterial (im vorliegenden Fall Glas) zusammenläuft bzw. zusammenfällt und die Ampullenöffnung verschließt. Die dem Verschließen vorangehende Ampullenvorerwärmung fand bevorzugt ebenfalls mittels eines diesen oberen Wandbereich der Ampulle bestrahlenden Laserstrahls statt; es ist aber auch denkbar, eine Höhendifferenz zwischen der Einwirkungszone der Laserstrahlung für die Vorerwärmung und der Einwirkungszone der Laserstrahlung für das Abschmelzen vorzusehen. (Letzteres gilt auch für den Fall, daß die Ampulle unter Abziehen eines Spießes verschlossen wird.)

Insbesondere im Falle von größeren Ampulleneinfüllöffnungen kann es vorteilhaft sein, das Zusammenfallen und Zusammenlaufen des erschmolzenen Ampullenwandmaterials durch mechanische Einwirkung zu fördern. Hierzu ist in Fig. 17 gestrichelt eine Düsenanordnung 150s mit einer oberen Düse 152s und einer unteren Düse 154s angedeutet, die jeweils einen Bearbeitungsgasstrahl 156s bzw. 158s auf den oberen, unter der Einwirkung der Laserstrahlung 36s stehenden Bereich der Ampulle 18s richten. Die Bearbeitungsgasstrahlen treffen auf das erschmolzene Wandmaterial und üben auf dieses Kräfte aus, die zuverlässig zu einem Zusammenlaufen und Zusammenfallen des Wandmaterials ohne Kapillarbildung führen. Das Endergebnis nach erfolgreichem Verschließen der Ampulle entspricht dann im wesentlichen wieder der Darstellung der Fig. 15h.

Es soll betont werden, daß die in den Figuren 15 und 16 gezeigten Ampullenformate nur exemplarischen Charakter haben, und daß auch beliebige andere Ampullenformate, insbesondere mit anderem Volumen und anderer Form, zum Einsatz kommen können.

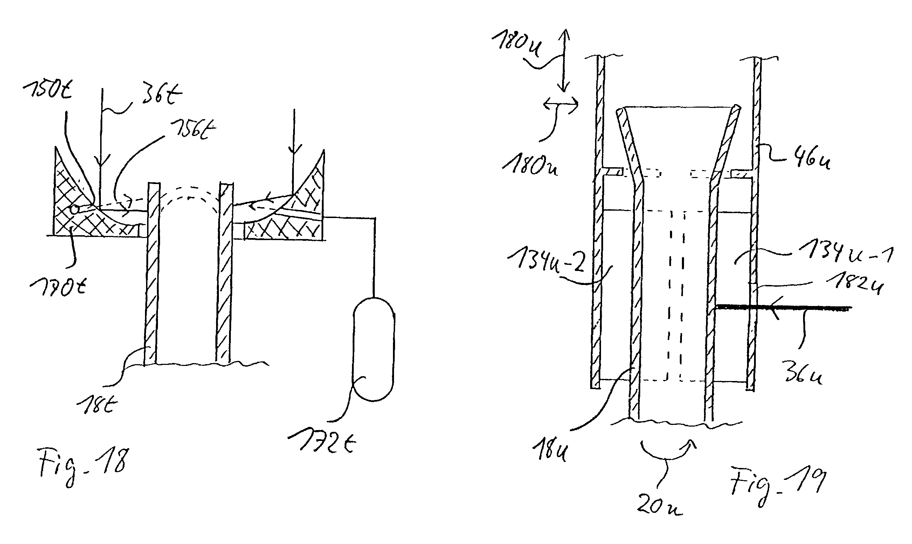

Beim Ausführungsbeispiel der Fig. 17 trifft die Laserstrahlung 36s nur von einer Seite auf die Ampulle, so daß diese während des Abschmelzens um ihre Längsachse rotiert (Pfeil 20s). Eine Ausführungsvariante, die ohne Ampullenrotation auskommt, ist in Fig. 18 gezeigt. Hier ist ein zur Ampullenlängsachse symmetrischer Umlenkspiegel 170t vorgesehen, der in Ampullenlängsachse zugeführte Laserstrahlung 36t derart umlenkt, daß die Ampulle 18t, von der nur ein Ampullenhals dargestellt ist, im oberen Endbereich des Ampullenhalses von allen Seiten mit Laserstrahlung bestrahlt wird. In den Spiegel 170t ist eine Bearbeitungsgasdüsenanordnung 150t integriert, die eine Mehrzahl von Bearbeitungsgasstrahlen 156t von allen Richtungen auf den durch die Laserstrahlung bestrahlten Endbereich des Ampullenhalses richtet. Hierzu ist ein Ringkanal für das Bearbeitungsgas in den Spiegel 170t integriert, von dem eine Mehrzahl von zu Öffnungen in der Spiegelfläche führenden Stichkanälen abzweigt. Eine Bearbeitungsgasquelle 172t ist schematisch angedeutet. Zum Bearbeitungsgas ist noch zu erwähnen, daß im Falle einer Begasung der Ampullen mit Schutzgas das Schutzgas auch als Bearbeitungsgas eingesetzt werden kann.

Ferner ist zu erwähnen, daß sich auch ohne Spießabziehen hervorragende, die Ampullen verschließende Ampullenkuppen erreicht werden können, wie dies in Fig. 18 in gestrichelten Linien angedeutet ist, wobei der Einsatz von Bearbeitungsgas nicht zwingend aber hilfreich ist. Dies dürfte daran liegen, daß sich die Einwirkung der Laserstrahlung exakt hinsichtlich Leistung und Intensitätsverteilung einstellen läßt, so daß eine optimale Abstimmung der Verfahrensparameter auf die jeweilige Ampulle möglich ist. Wenn von hervorragender Kuppe gesprochen wird, so ist hierdurch insbesondere gemeint, daß die verschlossene Ampulle im Bereich der Kuppe eine ausreichende Materialstärke aufweist und im erkalteten Zustand keine wesentlichen Spannungen auftreten. Es wird damit eine gute mechanische Belastbarkeit der verschmolzenen Ampullenköpfe erreicht, wie sich durch verschiedene Tests (beispielsweise Klopftest, Zangenabrißversuche) nachweisen läßt.

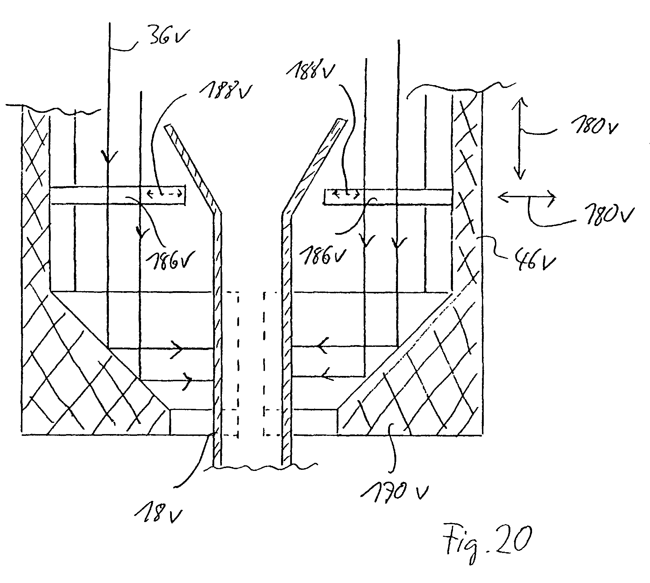

Fig. 19veranschaulichtdi e Integration einer Strahlungsreflexionsanordnung entsprechend der Anordnung der Fig. 13 und/oder der Fig. 14 in eine Spießabzugsvorrichtung. Gezeigt ist der Ampullenhals bzw. Ampullenspieß einer Ampulle 18u, der sich im Einflußbereich einer Spießabzugszange 46u befindet. Die Spießabzugszange ist zweiteilig ausgebildet mit Spießabzugszangenteilen, die entsprechend den Pfeilen 180u bewegbar gelagert sind. Der Ampullenspieß befindet sich im Eingriff mit der Spießabzugszange 46u; diese muß nur nach oben bewegt werden, um den Ampullenspieß abzuziehen, sobald der Ampullenspieß ausreichend durch die Laserstrahlung 36u abgeschmolzen ist.

In einem unteren Endbereich ist die Spießabzugszange mit zwei zum Ampullenspieß koaxial angeordneten Spiegeln 134u-1 und 134u-2 versehen, die zur Rückreflexion von vom Ampullenspieß ausgehender Strahlung (reflektierte Laserstrahlung oder/und Wärmestrahlung) dienen. Die Laserstrahlung 36u tritt durch eine Öffnung 132u im Spiegel 134u-1 in den Zwischenraum zwischen den beiden Spiegeln ein und trifft dort auf den Ampullenspieß.

In Abweichung von dieser Erläuterung können die Spiegel 134u-1 und 134u-2 alternativ oder zusätzlich auch dazu dienen, am Ampullenspieß vorbeigehende Laserstrahlung in Richtung zum Ampullenspieß umzulenken, so daß eine Bestrahlungssituation entsprechend Fig. 14 erreicht wird. Auf eine Rotation der Ampulle (Pfeil 20u) kann dann verzichtet werden.

Fig. 20 veranschaulicht die Integration eines dem Spiegel 170t (Fig. 18) im wesentlichen entsprechenden Spiegels 170v in einer Spießabzugseinrichtung mit einer zweiteiligen Spießabzugszange 46v. Wie im Fall der Fig. 18 wird die Laserstrahlung 36v parallel zur Längsachse der Ampulle 18v zugeführt und durch Spiegelflächen in Richtung zur Oberfläche des Ampullenspießes umgelenkt.

Die Spießabzugszangen 46v weisen Spießabzugsglieder 186v auf, die dafür bestimmt sind, beim Spießabziehen am oberen, sich nach außen erweiternden Abschnitt des Ampullenspießes anzugreifen. Je nach Leistung der eingesetzten Laserstrahlung kann man diese Spießabzugsglieder 186v stationär an den Spießabzugszangen 46v vorsehen, so daß die Spießabzugsglieder 186v mit Laserstrahlung bestrahlt werden. Bevorzugt ist aber, die Spießabzugsglieder 186v beweglich in den Spießabzugszangen 46v zu lagern, so daß sie erst dann in den Einflußbereich der Laserstrahlung hineingeschoben oder hineingeschwenkt werden, wenn der Spieß abgezogen werden soll. Dies ist in Fig. 20 durch gestrichelt dargestellte Pfeile 188v angedeutet.

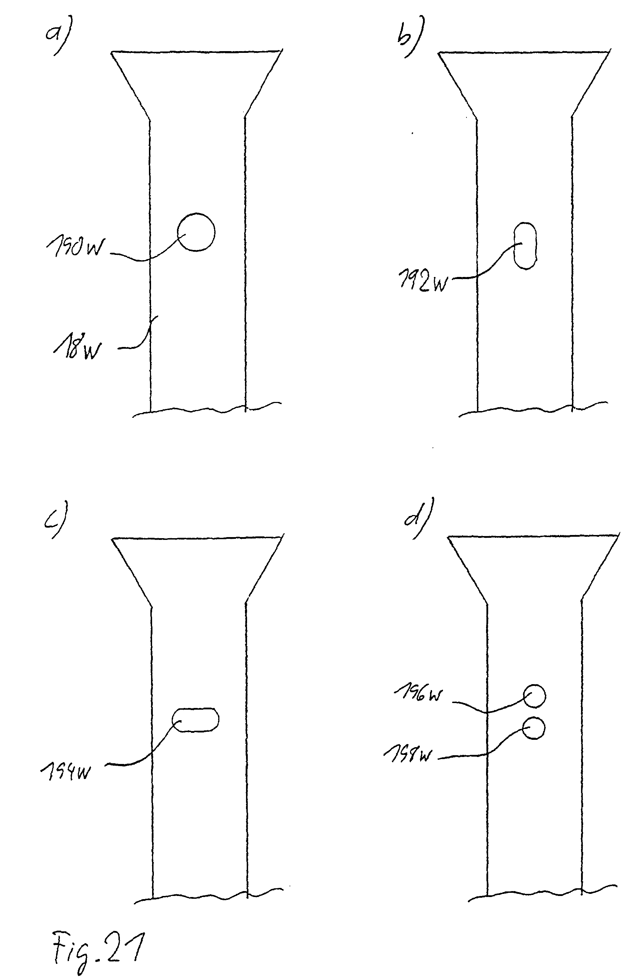

Fig. 21 veranschaulicht in den Figuren 21a, 21b, 21c und 21d verschiedene Möglichkeiten, wie die Intensitätsverteilung für das Vorerwärmen oder/und für das Abschmelzen einer Ampulle 18w gewählt sein kann. Fig. 21a zeigt einen kreisförmigen Laserbrennfleck 190w auf dem Ampullenspieß, Fig. 21b zeigt einen länglichen Brennfleck 192w, dessen Längsachse parallel zur Ampullenlängsachse ist, Fig. 21c zeigt ebenfalls einen länglichen Brennfleck 194w, dessen Längsachse im Gegensatz zum Beispiel der Fig. 21b orthogonal zur Ampullenlängsachse ist, und Fig. 21d zeigt zwei kreisförmige Brennflecke 196w und 198w, die in Ampullenlängsrichtung gegeneinander versetzt sind.

Die Intensitätsverteilung der Laserstrahlung beim Vorerwärmen bzw. beim Abschmelzen ist eine wichtige Einflußgröße, die je nach Ampullenformat (Ampullengeometrie, Wandstärke, Wandmaterial usw.) für ein optimales Verschließergebnis zu optimieren ist. Man wird hier am besten empirisch vorgehen und für die verschiedenen zu behandelnden Ampullenformate Versuche anstellen. Derartige Versuche stehen im Vermögen des Fachmanns und man wird ohne großen Aufwand Parameter finden, mit denen die jeweiligen Ampullen zuverlässig verschlossen werden. Einen gewissen Anhaltspunkt geben die folgenden Ergebnisse für 2 ml und 20 ml Ampullenformate:

### Verschmelzen von 2 ml Ampullenformaten

Ohne lasergestützte Ampullenvorerwärmung konnten 40 Ampullen/min bei 280 W Laserleistung mit guter Kopfform realisiert werden. Die Lasereinwirkungsdauer für die einzelne Ampulle lag in der Größenordnung von 850 msec. Verringert man die Laserleistung, so sind größere Laserstrahlungseinwirkungszeiten erforderlich. So konnten bei 144 W (ohne lasergestützte Ampullenvorerwämung) für eine Einwirkungszeitdauer von 2,3 sec Ampullen mit guter Festigkeit und Geometrie hergestellt werden.

Eine Verkürzung der Lasereinwirkungsdauer pro Bearbeitungstakt ist durch Vorsehen einer lasergestützten Ampullenvorerwärmung möglich. So konnten bei einer Laserleistung von 140 W für das Vorerwärmen und einer Laserleistung von 144 W für das Aufschmelzen 50 Ampullen/min mit guter Kopfform und Festigkeit verschlossen werden, wobei die Lasereinwirkungsdauer jeweils in der Größenordnung von 750 msec lag.

### Verschmelzen von 20 ml Ampullenformaten

Ohne lasergestützte Ampullenvorerwärmung konnten mit einer Lasereinwirkungsdauer von 2,3 sec und einer Laserleistung von 217 W Ampullen zuverlässig verschlossen werden. Durch Einführung einer lasergestützten Ampullenvorerwärmung konnten Ampullen unter Ausbildung einer guten Kopfform und guten Festigkeit verschlossen werden, wobei für eine Laserleistung von 192 W für die Vorerwärmung und 203 W für das Abschmelzen 25 Ampullen/min verschlossen werden konnten. Die Einwirkungsdauer der Laserstrahlung betrug jeweils etwa 2,1 sec.

Diese Verfahrensparameter haben nur exemplarischen Charakter und müssen entsprechend den eingesetzten Ampullen angepaßt werden. Die Parameter geben aber Größenordnungen von Laserleistungen und Einwirkungszeiten an, die als Ausgangspunkte für eine empirische Optimierung dienen können.

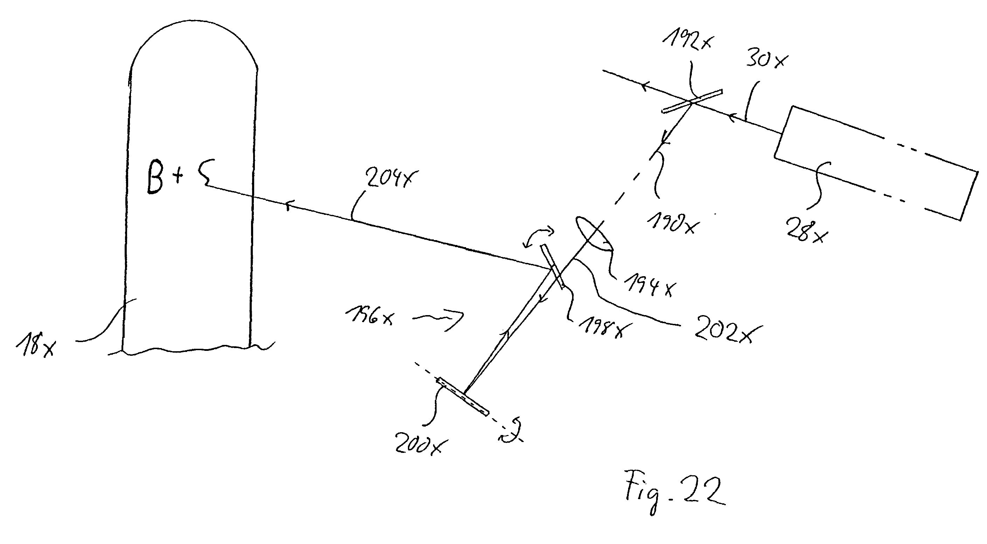

Fig. 22 zeigt eine Markierungs- oder/und Beschriftungsanordnung, die zum Markieren oder/und Beschriften von Ampullen, insbesondere von schon verschlossenen Ampullen 18x dient. Bevorzugt ist die Einrichtung in einer Ampullenfüll- und -verschließeinrichtung gemäß der Erfindung integriert. Die Einrichtung arbeitet mit Laserstrahlung 190x von einem Laser, beispielsweise einem der Laser einer erfindungsgemäßen Ampullenfüll- und -verschließeinrichtung, der an sich zum Vorerwärmen oder/und Abschmelzen von Ampullen dient. Es wird davon ausgegangen, daß bei der in Fig. 22 gezeigten Einrichtung die Laserstrahlung 1 90x von dem Laserstrahl 30x mittels einer Strahlteileranordnung 192x abgezweigt wird, der zum Vorerwärmen oder/und Abschmelzen von Ampullen dient. Die Laserstrahlung 190x wird über eine Strahlführungs- und Strahlformungsanordnung 194x (durch eine Linse symbolisiert) auf eine Schwenkspiegelanordnung 196x mit einem ersten Schwenkspiegel 198x und einem zweiten Schwenkspiegel 200x gegeben, wobei die Schwenkachsen der beiden Schwenkspiegel zueinander orthogonal sind, so daß der nach der Strahlführungs- und Strahlformungsanordnung 194x vorliegende Laserstrahl 202x in zueinander orthogonalen Richtungen verschwenkt werden kann, so daß beliebige Muster und Markierungen auf eine Fläche, insbesondere die Oberfläche einer Ampulle, geschrieben werden können, um Muster, Markierungen oder Beschriftungen auf die Ampulle zu schreiben. Der mittels der Schwenkspiegelanordnung 1 96x (dieser können noch weitere optische Komponenten zugeordnet sein, beispielsweise ein Planfeldobjektiv) steuerbare Laserstrahl 204x ruft eine dauerhafte Veränderung der Oberfläche der Ampulle hervor, während er über die Oberfläche geschrieben wird. Durch den Laserstrahl wird das Ampullenwandmaterial in einem oberflächennahen Bereich der Ampullenwand aufgeschmolzen und ggf. sogar verdampft, so daß nach der Beschriftung eine dauerhafte, praktisch nicht wieder entfernbare Beschriftung bzw. Markierung verbleibt.

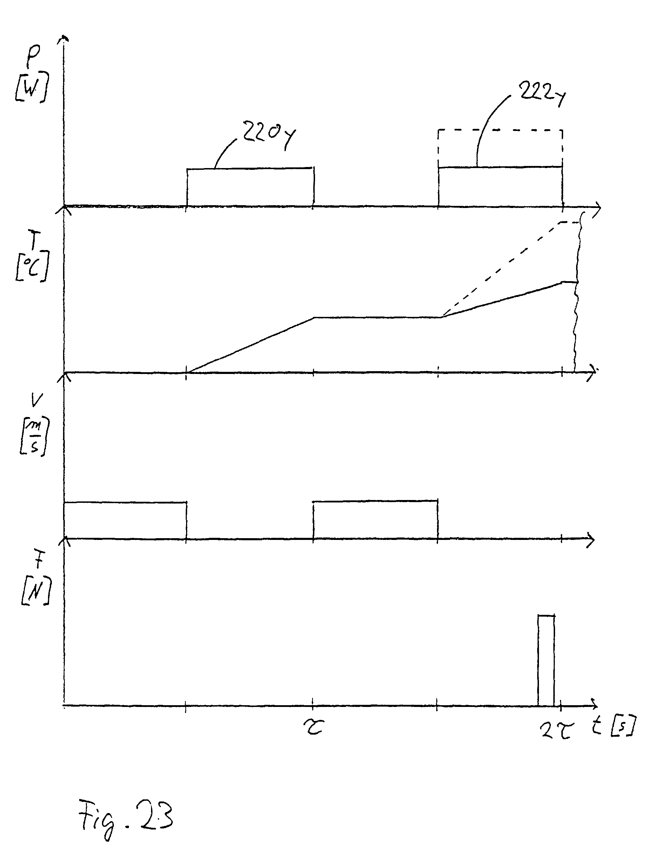

In Fig. 23 ist eine Variante für einen taktweisen Förder- und Verschließbetrieb einer Ampullenfüll- und -verschließeinrichtung veranschaulicht. Das oberste Teildiagramm gibt die eingesetzte Laserleistung während des Vorerwärmens (Kurvenabschnitt 220y) und während des Abschmelzens (Kurvenabschnitt 222y) an, wobei für den Kurvenabschnitt 222y gestrichelt eine Alternative dargestellt ist, nach der die für das Abschmelzen eingesetzte Laserleistung größer als die für das Vorerwärmen eingesetzte Laserleistung ist.

Das zweitoberste Teildiagramm symbolisiert den Anstieg der Temperatur des mit Laserstrahlung bestrahlten Ampullenbereichs während des Vorerwärmens und während des Abschmelzens, wobei für eine vereinfachte Darstellung von einem linearen Temperaturanstieg ausgegangen wurde. Dies ist aber nicht zwingend.

Das dritte Teildiagramm von oben gibt die Geschwindigkeit der Ampullenförderung beispielsweise mittels eines Förderrotors an. Bei dem gezeigten, getakteten Ausführungsbeispiel erfolgt die Bestrahlung der Ampullen mit Laserstrahlung während Zeitintervallen, in denen die Ampullen still stehen, von einer ggf. vorgesehenen Rotation der Ampullen um ihre Eigenachse für eine gleichmäßige Erwärmung der Ampulle ist hier abgesehen.

Das letzte Teildiagramm symbolisiert das Abziehen eines Ampullenspießes, sofern ein Spießabziehen überhaupt vorgesehen ist. Symbolhaft dargestellt ist die zum Spießabziehen erforderliche Spießabzugskraft. Das Spießabziehen erfolgt am Ende des Abschmelzungsintervalls.

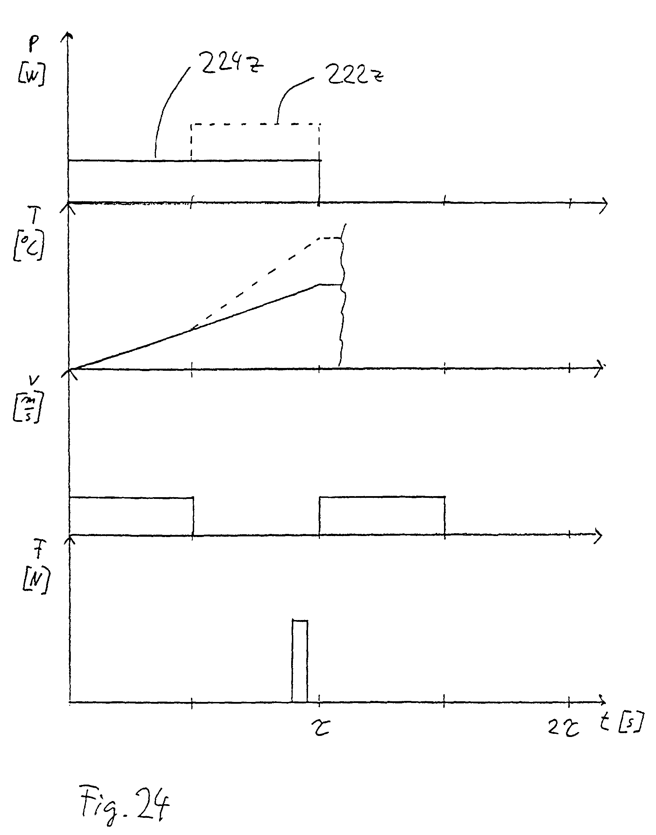

Das Diagramm der Fig. 24 zeigt eine Variante des taktweisen Füll- und Verschließbetriebs einer Ampullenfüll- und -verschließeinrichtung. Bei dieser Betriebsweise folgen Voerwärmung und Abschmelzen unmittelbar aufeinander und sind ggf. gar nicht eindeutig voneinander unterscheidbar (Kurvenabschnitt 224z). Eine eindeutige Unterscheidung von Vorerwärmung und Abschmelzen ist aber dann möglich, wenn für das Vorerwärmen und das Abschmelzen unterschiedliche Laserleistung eingesetzt wird. Eine derartige Situation ist gestrichelt angedeutet mit einem Kurvenabschnitt 222z, der das Abschmelzen repräsentiert, wobei für das Abschmelzen etwa die doppelte Laserleistung als für das Vorerwärmen eingesetzt wird. Die resultierende Temperatur der mit Laserstrahlung bestrahlten Ampullenabschnitte ist im zweitobersten Teildiagramm symbolhaft dargestellt, wobei für eine vereinfachte Darstellung wiederum von einem linearen Anstieg der Temperatur während der Vorerwärmung und während des Abschmelzens ausgegangen wurde.

Das drittoberste Teildiagramm macht deutlich, daß die Vorerwärmung während des Transports der Ampulle erfolgt, während das Abschmelzen bei stillstehender Ampulle (von etwaiger Ampullenrotation abgesehen) stattfindet. Sofern vorgesehen, erfolgt auch das Spießabziehen (unterstes Teildiagramm) bei stillstehender Ampulle.

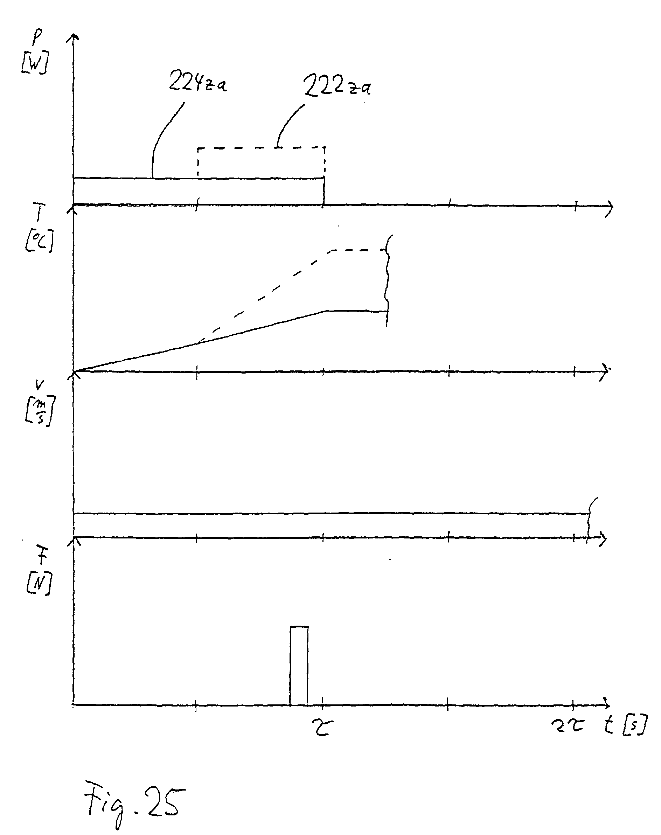

Fig. 25 veranschaulicht den kontinuierlichen Förder- und Verschließbetrieb bei einer entsprechend ausgebildeten Ampullenfüll- und -verschließeinrichtung. Hier bewegt sich die Ampulle kontinuierlich mit konstanter Geschwindigkeit fort, wie sich aus dem drittobersten Teildiagramm ergibt. Das erste, das zweite und das vierte Teildiagramm von oben entsprechen dem ersten, zweiten und vierten Teildiagramm der Fig. 24, so daß auf die Ausführungen hierzu verwiesen werden kann. Die Kurvenabschnitte im ersten Teildiagramm wurden mit den Bezugszeichen 222za und 222za gekennzeichnet.

## Patentansprüche

1. Ampullenfüll- und -verschließeinrichtung (10), umfassend:
- eine Füllstation (24) zum Füllen von Ampullen (18),
- eine Verschließstation (26) zum Verschließen von Ampullen durch Zuschmelzen einer Ampulleneinfüllöffnung, wobei der Verschließstation wenigstens ein Laser (28) zugeordnet ist zum Zuschmelzen der Ampulleneinfüllöffnung unter Einwirkung von Laserstrahlung,
- eine Fördereinrichtung (12) mit einer Ampullen-Förderstrecke zum Zuführen von leeren Ampullen zur Füllstation und von gefüllten Ampullen von der Füllstation zur Verschließstation und zum Abführen von gefüllten Ampullen von der Verschließstation,
**dadurch gekennzeichnet,**
**daß** eine Öffnungsstation (54a, 56a) vorgesehen ist, die die der Ampullenfüll- und -verschließeinrichtung in geschlossenem Zustand zugeführten Ampullen vor der Zufuhr zur Füllstation öffnet, und
**daß** der Öffnungsstation wenigstens ein Laser (50a) zugeordnet ist zum Öffnen der Ampullen unter Einwirkung von Laserstrahlung.

2. Einrichtung nach Anspruch 7, **dadurch gekennzeichnet, daß** die Öffnungsstation (54a, 56a, 50a) dafür ausgebildet ist, die jeweilige Ampulle (58a) in wenigstens drei Stufen zu öffnen, mit einer Vorerwärmungsstufe zum Abbauen eines Unterdrucks in der geschlossenen Ampulle, einer Überdruckablaßstufe zum Abbau eines Überdrucks in der Ampulle durch Erzeugen einer Ausgleichsöffnung in der Ampulle durch Laserstrahlung und einer Öffnungsstufe zum Erzeugen der Ampulleneinfüllöffnung durch Laserstrahlung, ggf. mit zusätzlichem Einsatz eines mechanischen Werkzeugs zur Öffnungserweiterung oder/und zum Abtrag geschmolzenen Ampullenwandmaterials.

3. Einrichtung nach der Ansprüch 1 oder 2, **dadurch gekennzeichnet, daß** die Einrichtung eine Abschirmungskammer (70) aufweist, in der die Füllstation, die Verschließstation und die Öffnungsstation angeordnet sind, wobei der wenigstens eine Laser (28b; 28d) vorzugsweise außerhalb der Abschirmungskammer angeordnet ist und die Laserstrahlung durch eine für die Laserstrahlung durchlässige Fensteranordnung (78b; 78d) in die Abschirmungskammer zuführbar ist.

4. Einrichtung nach Anspruch 3, **dadurch gekennzeichnet, daß** die Abschirmungskammer (70) eine Reinraum-Kammer oder/und Luft-Laminarfluß-Kammer ist.

5. Einrichtung nach einem der Ansprüche 1 - 4, **dadurch gekennzeichnet, daß** sie jedenfalls mit ihrer Füllstation, ihrer Verschließstation und ggf. ihrer Öffnungsstation in einem Raum höherer Luftqualität, insbesondere Reinraum, angeordnet ist, wohingegen der Laser vorzugsweise in einem Nachbarraum geringerer Luftqualität angeordnet ist.

6. Verfahren zum Öffnen einer geschlossenen Ampulle durch Aufschmelzen einer Ampullen-Einfüllöffnung zur Vorbereitung eines Einfüllens von Füllmittel in die Ampulle durch die Ampullen-Einfüllöffnung **dadurch gekennzeichnet, daß** die Ampullen-Einfüllöffnung unter Einwirkung von Laserstrahlung aufgeschmolzen wird, ggf. mit zusätzlichem Einsatz eines mechanischen Werkzeugs zur Öffnungserweiterung oder/und zum Abtrag geschmolzenen Ampullenwandmaterials.

7. Verfahren nach Anspruch 6, **dadurch gekennzeichnet, daß** das Öffnen der Ampulle in wenigstens drei Stufen erfolgt, mit einer Vorerwärmungsstufe zum Abbau eines Unterdrucks in der geschlossenen Ampulle, einer Überdruckablaßstufe zum Abbau eines Überdrucks in der Ampulle durch Erzeugen einer Ausgleichsöffnung in der Ampulle und einer Öffnungsstufe zum Erzeugen der Ampullen-Einfüllöffnung.

8. Verfahren nach Anspruch 6 order 7, **dadurch gekennzeichnet, daß** das Öffnen unter Reinraumbedingungen oder/und Luft-Laminarfluß-Bedingungen erfolgt.

## Claims

1. Ampoule filling and sealing device (10), comprising:
- a filling station (24) for filling ampoules (18),
- a sealing station (26) for sealing ampoules by melting together an ampoule filling aperture, at least one laser (28) being associated with the sealing station for melting together the ampoule filling aperture under the action of laser radiation,
- a conveying device (12) with an ampoule conveying section for supplying empty ampoules to the filling station and filled ampoules from the filling station to the sealing station and for removing filled ampoules from the sealing station,
**characterised in that** an opening station (54a, 56a) is provided which opens the ampoules, supplied to the ampoule filling and sealing device in the closed state, prior to supply to the filling station, and **in that** at least one laser (50a) is associated with the opening station for opening the ampoules under the action of laser radiation.

2. Device according to claim 1, **characterised in that** the opening station (54a, 56a, 50a) is configured to open the respective ampoule (58a) in at least three stages, comprising a preheating stage for dissipating a vacuum in the closed ampoule, an excess pressure relief stage for dissipating excess pressure in the ampoule by producing a compensating aperture in the ampoule by laser radiation and an opening stage for producing the ampoule filling aperture by laser radiation, optionally with additional use of a mechanical tool for enlarging the aperture or/and for removing molten ampoule wall material.

3. Device according to claim 1 or 2, **characterised in that** the device comprises a shielding chamber (70) in which the filling station, the sealing station and the opening station are arranged, wherein the at least one laser (28b; 28d) is preferably arranged outside the shielding chamber and the laser radiation can be supplied into the shielding chamber via a window arrangement (78b; 78d) transmissive to the laser radiation.

4. Device according to claim 3, **characterised in that** the shielding chamber (70) is a clean room chamber or/and an air/laminar flow chamber.

5. Device according to any of claims 1 to 4, **characterised in that** it is, in any case, arranged with its filling station, its sealing station and optionally its opening station in a chamber of higher air quality, in particular a clean room, whereas the laser is preferably arranged in an adjacent chamber of lower air quality.

6. Method for opening a closed ampoule by melting apart an ampoule filling aperture in preparation for filling the ampoule with filling material through the ampoule filling aperture, **characterised in that** the ampoule filling aperture is melted apart under the action of laser radiation, optionally with additional use of a mechanical tool for enlarging the aperture or/and for removing molten ampoule wall material.

7. Method according to claim 6, **characterised in that** the ampoule is opened in at least three stages, comprising a preheating stage for dissipating a vacuum in the closed ampoule, an excess pressure relief stage for dissipating an excess pressure in the ampoule by producing a compensating aperture in the ampoule and an opening stage for producing the ampoule filling aperture.

8. Method according to claim 6 or 7, **characterised in that** the ampoule is opened under clean room conditions or/and air/laminar flow conditions.

## Revendications

1. Dispositif de remplissage et de scellage d'ampoules (10) comprenant :
- un poste de remplissage (24) destiné au remplissage des ampoules (18),
- un poste de scellage (26) destiné au scellage des ampoules par fusionnement d'une ouverture de remplissage de l'ampoule, moyennant quoi au moins un laser (28) est affecté au poste de scellage pour le fusionnement de l'ouverture de remplissage de l'ampoule sous l'effet du rayonnement laser,
- un dispositif de manutention (12) avec un circuit de manutention d'ampoules pour l'amenée d'ampoules vides vers le poste de remplissage et d'ampoules pleines depuis le poste de remplissage vers le poste de scellage et pour l'évacuation des ampoules remplies depuis le poste de scellage,
**caractérisé en ce que**,
il est prévu un poste d'ouverture (54a, 56a), qui ouvre les ampoules amenées dans un état fermé au dispositif de remplissage et de scellage d'ampoules préalablement à leur amenée au poste de remplissage, et
au moins un laser (50a) est affecté au poste d'ouverture pour l'ouverture des ampoules sous l'effet du rayonnement laser.

2. Dispositif selon la revendication 1, **caractérisé en ce que** le poste d'ouverture (54a, 56a, 50a) est conçu pour ouvrir l'ampoule respective (58a) en au moins trois étapes avec une étape de pré-chauffage destinée à évacuer une dépression dans l'ampoule fermée, en une étape de dépressurisation destinée évacuer une surpression dans l'ampoule par réalisation d'un orifice d'équilibrage dans l'ampoule par rayonnement laser et une étape d'ouverture destinée à réaliser l'ouverture de remplissage de l'ampoule par rayonnement laser, le cas échéant, en employant en sus un outil mécanique pour élargir l'ouverture ou/et pour enlever d'une partie fusionnée du matériau de paroi d'ampoule.

3. Dispositif selon la revendication 1 ou 2, **caractérisé en ce que** le dispositif comporte une chambre blindée (70), dans laquelle sont disposés le poste de remplissage, le poste de scellage et le poste d'ouverture, moyennant quoi l'au moins un laser (28b ; 28d) est disposé de préférence en dehors de la chambre blindée et le rayonnement laser peut être appliqué dans la chambre blindée par un arrangement de fenêtre (78b ; 78d) laissant pénétrer le rayonnement laser.

4. Dispositif selon la revendication 3, **caractérisé en ce que** la chambre blindée (70) est une chambre de type salle blanche ou/et une chambre à écoulement d'air laminaire.

5. Dispositif selon l'une quelconque des revendications 1 à 4, **caractérisé en ce qu'**il est disposé chaque fois avec son propre poste de remplissage, son propre poste de scellage et, le cas échéant, son propre poste d'ouverture dans une pièce d'une qualité élevée de pureté de l'air, en particulier dans une salle blanche, alors que le laser est de préférence disposé dans une pièce adjacente à qualité de pureté d'air moindre.

6. Procédé pour l'ouverture d'une ampoule fermée par fusion d'une ouverture de remplissage d'ampoule pour préparer un remplissage avec un matériau de remplissage dans l'ampoule à travers l'ouverture de remplissage d'ampoule, **caractérisé en ce que**, l'ouverture de remplissage d'ampoule est ouverte par fusion sous l'effet du rayonnement laser, le cas échéant, en employant en sus un outil mécanique pour élargir l'ouverture ou/et pour enlever une partie fusionnée du matériau de paroi d'ampoule.

7. Procédé selon la revendication 6, **caractérisé en ce que** l'ouverture de l'ampoule se fait en au moins trois étapes, consistant en une étape de pré-chauffage destinée à évacuer une dépression dans l'ampoule fermée, une étape de dépressurisation destinée à évacuer une surpression dans l'ampoule par réalisation d'un trou d'équilibrage dans l'ampoule et une étape d'ouverture destinée à réaliser l'ouverture de remplissage d'ampoule.

8. Procédé selon la revendication 6 ou 7, **caractérisé en ce que** l'ouverture est réalisée dans un environnement de salle blanche ou/et dans un environnement avec un écoulement d'air laminaire.
